(19) Europäisches Patentamt
European Patent Office
Office européen des brevets

(11) EP 3 049 460 B1

(12) **FASCICULE DE BREVET EUROPEEN**

(45) Date de publication et mention de la délivrance du brevet:
**22.11.2017 Bulletin 2017/47**

(21) Numéro de dépôt: **14776844.4**

(22) Date de dépôt: **24.09.2014**

(51) Int Cl.:
***C08G 81/02*** (2006.01) ***B60C 1/00*** (2006.01)
***C08K 3/00*** (2006.01) ***C08F 297/04*** (2006.01)
***C08G 65/336*** (2006.01) ***C08L 53/00*** (2006.01)
***C08L 53/02*** (2006.01) ***C08L 71/02*** (2006.01)
***C08C 19/22*** (2006.01) ***C08C 19/25*** (2006.01)

(86) Numéro de dépôt international:
**PCT/EP2014/070403**

(87) Numéro de publication internationale:
**WO 2015/044225 (02.04.2015 Gazette 2015/13)**

(54) **ELASTOMÈRE DIÉNIQUE TRIBLOC DONT LE BLOC CENTRAL EST UN BLOC POLYÉTHER ET FONCTIONNALISÉ AMINE EN EXTRÉMITÉ DE CHAÎNE**

TRIBLOCKDIENELASTOMER MIT POLYETHERBLOCK ALS ZENTRALEM BLOCK UND AMINFUNKTIONALISIERTEN KETTENENDEN

TRIBLOCK DIENE ELASTOMER WHERE THE CENTRAL BLOCK IS A POLYETHER BLOCK AND THE CHAIN ENDS ARE AMINE-FUNCTIONALISED

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **27.09.2013 FR 1359352**

(43) Date de publication de la demande:
**03.08.2016 Bulletin 2016/31**

(73) Titulaire: **Compagnie Générale des Etablissements Michelin**
**63000 Clermont-Ferrand (FR)**

(72) Inventeurs:
- **DIRE, Charlotte**
  **F-63040 Clermont-Ferrand Cedex 09 (FR)**
- **MARECHAL, Jean Marc**
  **F-63040 Clermont-Ferrand Cedex 09 (FR)**
- **SEEBOTH, Nicolas**
  **F-63040 Clermont-Ferrand Cedex 09 (FR)**

(74) Mandataire: **Le Cam, Véronique Marie Christine**
**M.F.P. Michelin,**
**SGD/LG/PI,**
**F35,**
**Ladoux**
**63040 Clermont-Ferrand-Cedex 9 (FR)**

(56) Documents cités:
**EP-A1- 1 127 909** **WO-A2-2007/024797**
**FR-A1- 2 918 064** **FR-A1- 2 918 065**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

EP 3 049 460 B1

## Description

L'invention se rapporte à un élastomère diénique tribloc dont le bloc central est un bloc polyéther et dont les extrémités de chaîne sont fonctionnalisées par une fonction amine. L'invention concerne également un procédé de préparation d'un tel élastomère diénique tribloc, une composition le comprenant, ainsi qu'un article semi-fini et un pneumatique comprenant cette composition.

Depuis que les économies de carburant et la nécessité de préserver l'environnement sont devenues une priorité, il est souhaitable de produire des mélanges possédant de bonnes propriétés mécaniques, en particulier une bonne rigidité et une hystérèse aussi faible que possible afin de pouvoir les mettre en oeuvre sous forme de compositions de caoutchouc utilisables pour la fabrication de divers produits semi-finis entrant dans la composition d'enveloppes de pneumatique, tels que par exemple des sous-couches, des flancs, des bandes de roulement, et afin d'obtenir des pneumatiques possédant une résistance au roulement réduite.

La réduction de l'hystérèse des mélanges est un objectif permanent qui doit toutefois se faire en conservant l'aptitude à la mise en oeuvre, en particulier à cru, des mélanges.

Pour atteindre l'objectif de baisse d'hystérèse, de nombreuses solutions ont déjà été expérimentées. En particulier, on peut citer la modification de la structure des polymères et des copolymères diéniques en fin de polymérisation au moyen d'agents de fonctionnalisation ou bien l'utilisation d'amorceurs fonctionnels, le but étant d'obtenir une bonne interaction entre le polymère ainsi modifié et la charge, qu'il s'agisse du noir de carbone ou d'une charge inorganique renforçante.

Dans le cadre des mélanges contenant une charge inorganique renforçante, il a été proposé d'utiliser des copolymères diéniques à bloc polyéther.

À titre d'exemple, on peut citer le brevet EP1127909B1 qui décrit un procédé de préparation et l'utilisation en composition de caoutchouc vulcanisable d'un copolymère diénique possédant un bloc polyéther en extrémité de chaîne. Ce copolymère est destiné à interagir avec la charge inorganique renforçante de manière à diminuer l'hystérèse du mélange. Le procédé de préparation de ce copolymère comprend une méthode de greffage du bloc polyéther complexe en trois étapes : i) fonctionnalisation des extrémités de chaînes polymère vivantes par un composé organosiloxane cyclique pour former un élastomère diénique vivant à extrémité de chaîne silanolate, ii) réaction du polymère vivant ainsi fonctionnalisé avec un dialkyldihalogénosilane, iii) puis réaction de ce polymère fonctionnalisé Si-X (X étant un halogène) avec un polyéthylène glycol en présence de diméthylaminopyridine. Il apparaît que les propriétés d'hystérèse de la composition de caoutchouc comprenant ce polymère sont significativement améliorées par rapport à une composition comprenant un élastomère non fonctionnel. Néanmoins, cette diminution de l'hystérèse peut s'accompagner d'une diminution de la rigidité. En outre, le procédé de synthèse du copolymère à blocs est complexe.

Le brevet US6518369B2 propose une composition de caoutchouc renforcée contenant un copolymère diénique à bloc polyéther, ainsi qu'un procédé de préparation dudit copolymère. La solution retenue consiste à faire réagir les extrémités de chaînes polymère vivantes sur un polyéther spécifique. Bien que proposant une amélioration du taux de greffage sur les chaînes polymère préparées en solution, ce taux reste insatisfaisant avec le procédé décrit dans le brevet. Or, le rendement de greffage du bloc polyéther est déterminant pour la qualité de l'interaction du copolymère à bloc avec la charge renforçante dans une composition de caoutchouc renforcée, et donc pour l'hystérèse de cette composition.

On peut enfin citer le brevet FR2918064B1 au nom de la demanderesse qui décrit un procédé de préparation et l'utilisation en composition de caoutchouc vulcanisable d'un copolymère diénique à bloc polyéther. Le procédé de préparation de ce copolymère comprend une méthode de greffage du bloc polyéther simplifiée en deux étapes, avec un rendement supérieur que le procédé proposé dans brevet US6518369B2. Ce procédé comprend: i) la fonctionnalisation des extrémités de chaînes polymère vivantes avec un composé organosiloxane cyclique pour former un élastomère diénique vivant à extrémité de chaîne silanolate, et ii) la réaction du polymère vivant ainsi fonctionnalisé avec un polyéther fonctionnalisé Si-X (X = halogène, OR). Cependant, l'amélioration de l'hystérèse s'accompagne d'une diminution de la rigidité.

Ces élastomères fonctionnalisés ont été décrits dans l'art antérieur comme efficaces pour réduire l'hystérèse. Néanmoins, il s'avère que les compositions contenant des élastomères ainsi modifiés ne présentent pas toujours une hystérèse satisfaisante et des propriétés mécaniques satisfaisantes pour une utilisation en bande de roulement pour pneumatique.

C'est la raison pour laquelle des recherches ont été menées sur d'autres réactions de fonctionnalisation, en vue de l'obtention de compositions de caoutchouc possédant un compromis hystérèse / rigidité amélioré.

Le but de la présente invention est donc de proposer une telle composition. Un objectif est en particulier de proposer un élastomère fonctionnalisé interagissant de manière satisfaisante avec la charge renforçante d'une composition de caoutchouc le contenant afin d'en diminuer l'hystérèse, tout en conservant une mise en oeuvre à cru acceptable et une rigidité satisfaisante, en vue notamment d'une utilisation en bande de roulement pour pneumatique.

Ce but est atteint en ce que les inventeurs viennent de découvrir de manière surprenante au cours de leurs

recherches qu'un élastomère diénique tribloc dont le bloc central est un bloc polyéther, et dont les deux extrémités de chaîne sont fonctionnalisées à au moins 70% molaire par une fonction amine, confère aux compositions le contenant une amélioration remarquable et inattendue du compromis hystérèse / rigidité / mise en oeuvre à cru.

En effet, d'une part le compromis hystérèse / rigidité de telles compositions est amélioré par rapport à celui des compositions contenant des élastomères ne possédant pas de fonction amine en extrémité de chaîne, notamment par rapport à celui de compositions contenant des élastomères diéniques tribloc dont le bloc central est un bloc polyéther, mais ne possédant pas de fonction amine en extrémité de chaîne. D'autre part, la mise en oeuvre à cru de telles compositions est similaire à celle de composition contenant des élastomères non fonctionnalisés et reste acceptable.

L'invention a donc pour objet un élastomère diénique tribloc dont le bloc central est un bloc polyéther de masse moléculaire moyenne en nombre allant de 150 à 5000 g/mol et est relié par un atome de silicium à chacun des blocs latéraux, et dont les extrémités de chaîne sont fonctionnalisées à au moins 70% molaire, par rapport au nombre de moles de bout de chaîne, par une fonction amine.

L'invention a également pour objet un procédé de synthèse dudit élastomère diénique tribloc.

Un autre objet de l'invention est une composition de caoutchouc renforcée à base au moins d'une charge renforçante et d'une matrice élastomère comprenant au moins ledit élastomère diénique tribloc.

Les Figures 1 et 2 montrent les propriétés dynamiques et la viscosité Mooney de compositions comprenant différents élastomères diéniques.

Dans la présente description, sauf indication expresse différente, tous les pourcentages (%) indiqués sont des % en masse. D'autre part, tout intervalle de valeurs désigné par l'expression "entre a et b" représente le domaine de valeurs allant de plus de a à moins de b (c'est-à-dire bornes a et b exclues) tandis que tout intervalle de valeurs désigné par l'expression "de a à b" signifie le domaine de valeurs allant de a jusqu'à b (c'est-à-dire incluant les bornes strictes a et b).

Par fonctionnalisation des extrémités de chaîne à au moins 70% molaire par une fonction amine, on entend selon l'invention, un taux molaire de fonctionnalisation en extrémité de chaîne d'au moins 70% par rapport au nombre de moles de bout de chaîne. En d'autres termes, après la polymérisation des monomères, au moins 70% molaire des chaînes vivantes synthétisées porte à l'extrémité non réactive de la chaîne une fonction amine issue de l'initiateur de polymérisation.

Cela signifie donc qu'au moins 70% molaire des extrémités de chaîne de l'élastomère diénique tribloc objet de l'invention sont fonctionnalisées par une fonction amine.

Par l'expression composition "à base de", il faut entendre une composition comportant le mélange et/ou le produit de réaction des différents constituants utilisés, certains de ces constituants de base étant susceptibles de, ou destinés à, réagir entre eux, au moins en partie, lors des différentes phases de fabrication de la composition, en particulier au cours de sa réticulation ou vulcanisation.

Par élastomère diénique, doit être compris de manière connue un (on entend un ou plusieurs) élastomère issu au moins en partie (i.e., un homopolymère ou un copolymère) de monomères diènes (monomères porteurs de deux doubles liaisons carbone-carbone, conjuguées ou non). Plus particulièrement, par élastomère diénique, on entend tout homopolymère obtenu par polymérisation d'un monomère diène conjugué ayant 4 à 12 atomes de carbone, ou tout copolymère obtenu par copolymérisation d'un ou plusieurs diènes conjugués entre eux ou avec un ou plusieurs composés vinylaromatiques ayant de 8 à 20 atomes de carbone. Dans le cas de copolymères, ceux-ci contiennent de 20 % à 99 % en poids d'unités diéniques, et de 1 à 80 % en poids d'unités vinylaromatiques.

A titre de diènes conjugués utilisables dans le procédé conforme à l'invention conviennent notamment le butadiène-1,3, le 2-méthyl-1,3-butadiène, les 2,3 di(alcoyle en $C_1$ à $C_5$)-1,3-butadiène tels que par exemple le 2,3-diméthyl-1,3-butadiène, 2,3-diéthyl-1,3-butadiène, 2-méthyl-3-éthyl-1,3-butadiène, le 2-méthyl-3-isopropyl-1,3-butadiène, le phényl-1,3-butadiène, le 1,3-pentadiène et le 2,4 hexadiène, etc.

A titre de composés vinylaromatiques conviennent notamment le styrène, l'ortho-, méta, para-méthylstyrène, le mélange commercial "vinyltoluène", le para-tertiobutylstyrène, les méthoxystyrènes, le vinylmésitylène, le divinylbenzène et le vinylnaphtalène.

L'élastomère diénique de la composition conforme à l'invention est choisi préférentiellement dans le groupe des élastomères diéniques fortement insaturés constitué par les polybutadiènes (BR), les polyisoprènes (IR) de synthèse, les copolymères de butadiène, en particulier les copolymères de butadiène et d'un monomère vinyl aromatique, les copolymères d'isoprène et les mélanges de ces élastomères. De tels copolymères sont plus particulièrement des copolymères de butadiène-styrène (SBR), des copolymères d'isoprène-butadiène (BIR), des copolymères d'isoprène-styrène (SIR) et des copolymères d'isoprène-butadiène-styrène (SBIR). Parmi ces copolymères, les copolymères de butadiène-styrène (SBR) sont particulièrement préférés.

L'élastomère diénique tribloc selon l'invention répond de préférence à la formule (I) suivante :

$$R_1\text{-}(A')_2$$

dans laquelle,

$R_1$ représente un dérivé hydrocarboné alkyle divalent en $C_1$-$C_{15}$, aryle en $C_6$-$C_{15}$ ou aralkyle en $C_7$-$C_{15}$, chaque A' représente, de manière identique ou différente, le groupe de formule générale (II) :

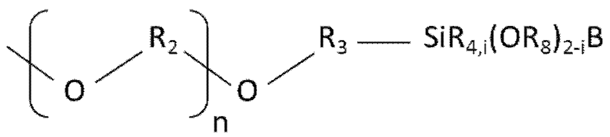

dans laquelle,

$R_2$ représente un radical alkyle divalent en $C_1$-$C_{10}$, particulièrement le radical -CH($R_6$)-CH($R_7$)- dans lequel $R_6$ et $R_7$ sont, indépendamment l'un de l'autre, un atome d'hydrogène ou un radical alkyl en $C_1$-$C_4$,
$R_3$ représente un radical alkyle divalent en $C_1$-$C_{50}$, aryle en $C_6$-$C_{50}$ ou aralkyle en $C_7$-$C_{50}$,
$R_4$ représente un radical alkyle en $C_1$-$C_{50}$, aryle en $C_6$-$C_{50}$ ou aralkyle en $C_7$-$C_{50}$,
$R_8$ représente un atome d'hydrogène ou un radical alkyle en $C_1$-$C_{18}$, cycloalkyle en $C_5$-$C_{18}$ ou aryle en $C_6$-$C_{18}$,
n est un nombre supérieur à 1,
i est un nombre entier variant de 0 à 2,
B représente le groupement -[(O-$SiR_9R_{10}$)$_q$-P], dans lequel $R_9$ et $R_{10}$ représentent, indépendamment l'un de l'autre, un radical alkyle $C_1$-$C_{50}$ ou aryle en $C_6$-$C_{50}$ ou aralkyle en $C_7$-$C_{50}$, q est un nombre entier allant de 0 à 10, et P est un élastomère diénique fonctionnalisé à au moins 70% molaire en extrémité de chaîne par une fonction amine.

Selon des variantes avantageuses de l'invention, distinctes mais combinables entre elles :

- $R_1$ représente un radical alkyle en $C_1$-$C_4$, de préférence un groupement -$CH_2$-$CH_2$- ou -$CH_2$-$CH(CH_3)$-,
- $R_2$ est un radical éthylène ou propylène, de préférence un radical éthylène,
- $R_3$ représente un groupe alkyle en $C_1$-$C_{10}$, de préférence le radical alkyle divalent linéaire en $C_3$,
- $R_4$ représente un radical alkyle en $C_1$-$C_{10}$, de préférence le radical méthyle,
- $R_8$ représente un atome d'hydrogène ou un radical alkyle en $C_1$-$C_4$, de préférence $R_8$ représente un atome d'hydrogène ou un radical méthyle ou éthyle,
- n est un nombre inférieur à 120, de préférence un nombre variant de 2 à 60,
- i est un nombre entier égal à 0 ou 1,
- $R_9$ et $R_{10}$ représentent, indépendamment l'un de l'autre, un radical alkyle en $C_1$-$C_{10}$, de préférence le radical méthyle,
- q est un nombre entier non nul, de préférence égal à 1.

Le bloc central polyéther présente de préférence une masse moléculaire moyenne en nombre allant de 150 à 3000 g/mol, mieux de 200 à 3000 g/mol.

Selon un autre mode de réalisation, combinables aux précédents, l'élastomère diénique tribloc selon l'invention est fonctionnalisé à 100% en bout de chaîne par une fonction amine.

L'élastomère diénique tribloc selon l'invention peut être préparé selon un procédé incluant la modification de l'élastomère par réaction d'un élastomère diénique vivant sur un agent de fonctionnalisation approprié, c'est-à-dire un polyéther au moins fonctionnel à chaque extrémité de chaîne en vue de coupler, la fonction étant tout type de groupement chimique connu par l'homme de l'art pour réagir avec un bout de chaîne vivant. Un tel procédé fait également l'objet de l'invention.

Ainsi, selon l'invention, l'élastomère diénique tribloc est obtenu par la mise en oeuvre des étapes suivantes :

- polymérisation anionique d'au moins un monomère diène conjugué en présence d'un initiateur de polymérisation possédant une fonction amine,
- modification de l'élastomère diénique vivant porteur d'un site actif obtenu à l'étape précédente par un agent de fonctionnalisation, susceptible de coupler les chaînes élastomères, porteur d'un bloc polyéther de masse moléculaire moyenne en nombre allant de 150 à 5000 g/mol, avec un rapport molaire de l'agent de fonctionnalisation à l'initiateur de polymérisation d'une valeur allant de 0,40 à 0,60.

Les initiateurs de polymérisation à fonction amine conduisent à des chaînes vivantes ayant un groupement amine à l'extrémité non réactive de la chaîne.

A titre d'initiateurs de polymérisation à fonction amine, on peut citer de manière préférée les amidures de lithium, produits de la réaction d'un composé organolithien, de préférence alkyllithien, et d'une amine secondaire acyclique ou cyclique, de préférence cyclique.

A titre d'amine secondaire utilisable pour préparer les initiateurs, on peut citer la diméthylamine, diéthylamine, dipropylamine, di-n-butylamine, di-sec-butylamine, dipentylamine, dihexylamine, di-n-octylamine, di-(2-ethylhexyl)amine, di-cyclohexylamine, N-méthylbenzylamine, diallylamine, morpholine, piperazine, 2,6-diméthylmorpholine, 2,6-diméthylpiperazine, 1-éthylpiperazine, 2-méthylpiperazine, 1-benzylpiperazine, piperidine, 3,3-diméthylpiperidine, 2,6-diméthylpiperidine, 1-méthyl-4-(méthylamino)piperidine, 2,2,6,6-tetraméthylpiperidine, pyrrolidine, 2,5-diméthylpyrrolidine, azetidine, hexaméthylèneimine, heptaméthylèneimine, 5-benzyloxyindole, 3-azaspiro[5,5]undecane, 3-aza-bicycle[3.2.2]nonane, carbazole, bistriméthylsilylamine, la pyrrolidine et l'hexaméthylèneamine.

L'amine secondaire, lorsqu'elle est cyclique, est de préférence choisie parmi la pyrrolidine et l'hexaméthylèneamine.

Le composé alkyllithien est de préférence l'éthyllithium, le n-butyllithium (n-BuLi), l'isobutyllithium, etc.

De préférence, l'initiateur de polymérisation à fonction amine est soluble dans un solvant hydrocarboné sans utilisation d'un agent de solvatation.

L'initiateur de polymérisation à fonction amine est un produit de réaction d'un composé alkyllithien et d'une amine secondaire. En fonction du rapport molaire du composé alkyllithien à l'amine secondaire, le produit de la réaction peut comporter de l'alkyllithien résiduel. En conséquence, l'initiateur de polymérisation peut être constitué d'un mélange d'amidure de lithium et d'alkyllithien résiduel. Cet alkyllithien résiduel conduit à la formation de chaînes vivantes ne portant pas de groupement amine en extrémité de chaîne. Selon l'invention, l'initiateur de polymérisation ne contient pas plus de 30% de composé alkyllithien. Au-delà de cette valeur, les effets techniques recherchés, notamment l'amélioration du compromis de propriétés hystérétiques et de rigidité, ne sont pas satisfaisants. Selon une variante du procédé, l'initiateur de polymérisation ne contient pas de composé alkyllithien.

La polymérisation est de préférence effectuée en présence d'un solvant hydrocarboné inerte qui peut être par exemple un hydrocarbure aliphatique ou alicyclique comme le pentane, l'hexane, l'heptane, l'iso-octane, le cyclohexane, le méthylcyclohexane ou un hydrocarbure aromatique comme le benzène, le toluène, le xylène.

La polymérisation peut être effectuée en continu ou en discontinu. On effectue généralement la polymérisation à une température comprise entre 20 °C et 150 °C et de préférence voisine de 30 °C à 110 °C.

La deuxième étape du procédé selon l'invention consiste en la modification de l'élastomère diénique vivant, obtenu à l'issue de l'étape de polymérisation anionique, selon des conditions opératoires favorisant la réaction de couplage de l'élastomère diénique par un agent de fonctionnalisation approprié. Cette étape conduit à la synthèse d'un élastomère diénique tribloc.

La réaction de modification de l'élastomère diénique vivant, obtenu à l'issue de la première étape, peut se dérouler à une température comprise entre - 20°C et 100 C, par addition sur les chaînes polymères vivantes ou inversement d'un agent de fonctionnalisation non polymérisable susceptible d'apporter un bloc polyéther de masse moléculaire moyenne en nombre allant de 150 à 5000 g/mol, le bloc central étant avantageusement lié à chacun des blocs latéraux par un atome de silicium. Cet agent de fonctionnalisation non polymérisable permet notamment d'obtenir les structures de formule (I) décrites plus haut.

Ainsi, de préférence, l'agent de fonctionnalisation répond à la formule (III) suivante :

$$R_1\text{-}(A)_2$$

dans laquelle,

$R_1$ représente un dérivé hydrocarboné alkyle divalent en $C_1$-$C_{15}$, aryle en $C_6$-$C_{15}$ ou aralkyle en $C_7$-$C_{15}$,
chaque A représente, de manière identique ou différente, le groupe de formule générale (IV) :

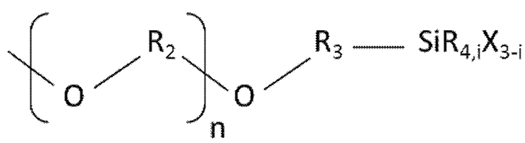

dans laquelle,

$R_2$ représente un radical alkyle divalent en $C_1$-$C_{10}$, particulièrement le radical -CH($R_6$)-CH($R_7$)- dans lequel $R_6$ et $R_7$ sont, indépendamment l'un de l'autre, un atome d'hydrogène ou un radical alkyl en $C_1$-$C_4$,
$R_3$ représente un radical alkyle divalent en $C_1$-$C_{50}$, aryle en $C_6$-$C_{50}$ ou aralkyle en $C_7$-$C_{50}$,
$R_4$ représente un radical alkyle en $C_1$-$C_{50}$, aryle en $C_6$-$C_{50}$ ou aralkyle en $C_7$-$C_{50}$,
chaque X représente, de manière identique ou différente, l'un au moins des groupes choisis parmi un atome

d'halogène, et un groupe de formule $-OR_5$ dans laquelle $R_5$ représente un radical alkyle en $C_1$-$C_{18}$, cycloalkyle en $C_5$-$C_{18}$ ou aryle en $C_6$-$C_{18}$,
n est un nombre supérieur à 1,
i est un nombre entier de 0 à 2.

Selon des variantes avantageuses de l'invention de l'agent de fonctionnalisation utilisé selon l'invention, distinctes mais combinables entre elles :

- $R_1$ représente un radical alkyle en $C_1$-$C_4$, de préférence un groupement $-CH_2-CH_2-$ ou $-CH_2-CH(CH_3)-$,
- $R_2$ est un radical éthylène ou propylène, de préférence un radical éthylène,
- $R_3$ représente un radical alkyle en $C_1$-$C_{10}$, de préférence le radical alkyle divalent linéaire en $C_3$,
- $R_4$ représente un radical alkyle en $C_1$-$C_{10}$, de préférence le radical méthyle,
- X représente, de manière identique ou différente, l'un au moins des groupes choisis parmi un atome de chlore et un groupe de formule $-OR_5$ dans laquelle $R_5$ représente un radical alkyle en $C_1$-$C_4$, de préférence un radical méthyle ou éthyle.
- n est un nombre inférieur à 120, de préférence un nombre variant de 2 à 60,
- i est un nombre entier égal à 0 ou 1.

Le bloc polyéther de l'agent de fonctionnalisation utilisé selon l'invention présente de préférence une masse moléculaire moyenne en nombre allant de 150 à 3000 g/mol, mieux de 200 à 3000 g/mol.

L'homme du métier comprendra aisément à la lecture des formules (III) et (IV) ci-dessus qu'il existe, étant donné la valence 2 du groupement $R_1$, deux groupes A, identiques ou différents, dans lesquels il existe au moins un et au plus trois groupe(s) X, identiques ou différents, lié(s) au bloc polyéther par l'atome de silicium.

Parmi les agents de fonctionnalisation répondant à la formule générale (III), on peut citer par exemple le poly(oxy-1,2-éthanediyl), α-[3-(méthoxydiméthylsilyl)propyl]-ω-[3-(méthoxydiméthylsilyl)propoxy], le poly(oxy-1,2-éthanediyl), α-[3-(diméthoxyméthylsilyl)propyl]-ω-[3-(diméthoxyméthylsilyl)propoxy], le poly(oxy-1,2-éthanediyl), α-[3-(éthoxydiméthylsilyl)propyl]-ω-[3-(éthoxydiméthylsilyl)propoxy], le poly(oxy-1,2-éthanediyl), α-[3-(diéthoxyméthylsilyl)propyl]-ω-[3-(diéthoxyméthylsilyl)propoxy], le poly(oxy-1,2-éthanediyl), α-[3-(dichlorométhylsilyl)propyl]-ω-[3-(dichlorométhylsilyl)propoxy], le poly[oxy(méthyl-1,2-éthanediyl)], α-[3-(dichlorométhylsilyl)propyl]-ω-[3-(dichlorométhylsilyl)propoxy].

Cet agent de fonctionnalisation peut être soit acheté directement, soit préparé selon des méthodes décrites dans la littérature consistant par exemple à réaliser une première réaction d'allylation sur un polyéthylène glycol en présence de bromure d'allyle et d'une base telle que l'hydroxyde de potassium, soit en solution aqueuse, soit dans un milieu biphasique, soit encore dans un solvant organique comme le tétrahydrofurane puis une réaction d'hydrosilylation par exemple en utilisant un catalyseur au platine tel que le complexe platine(0)-1,3-divinyl-1,1,3,3-tétraméthyldisiloxane ou l'acide hexachloroplatinique, en présence d'un silane tel que le chlorodiméthylsilane, le dichlorométhylsilane ou le trichlorosilane, ou encore un alkylalkoxysilane, en présence ou en l'absence de solvant.

Le mélangeage du polymère diénique vivant et de l'agent de fonctionnalisation peut être réalisé par tout moyen approprié. Le temps de réaction entre le polymère diénique vivant et l'agent de couplage peut être compris entre 10 secondes et 2 heures.

Le rapport molaire entre l'agent de fonctionnalisation et l'initiateur des chaînes polymères vivantes varie de 0,40 à 0,60 préférentiellement de 0,45 à 0,55.

Le solvant utilisé pour la réaction de couplage des chaînes polymères, de préférence, est le même que le solvant hydrocarboné inerte éventuellement utilisé pour la polymérisation, et de préférence le cyclohexane ou tout autre solvant hydrocarboné aliphatique.

Selon des variantes de ce procédé, ces étapes comprennent une étape de stripping en vue de récupérer l'élastomère issu des étapes antérieures sous forme sèche. Selon la nature des fonctions -Si-X présentes sur l'élastomère diénique tribloc, lorsque l'atome de silicium du groupement A porte plus d'un site réactif, et des conditions opératoires, cette étape de stripping peut avoir notamment pour effet d'hydrolyser tout ou partie de ces fonctions en fonctions silanol Si-OH. Selon d'autres variantes, lorsque l'atome de silicium du groupement A porte plus d'un site réactif halogéné Si-X, la réaction de fonctionnalisation peut se poursuivre par une étape d'hydrolyse ou d'alcoolyse connue en soi permettant de générer des fonctions silanol Si-OH ou alcoxysilane Si-OR à partir de ces sites actifs halogénés n'ayant pas réagi avec l'élastomère vivant. Cette étape d'hydrolyse ou alcoolyse peut être réalisée en ajoutant la solution de polymère à une solution aqueuse ou à une solution contenant un alcool ou à l'inverse, en ajoutant l'eau ou l'alcool à la solution de polymère. Cette étape pourra être réalisée ou non en présence d'une base ou d'un tampon. A titre d'exemple, on pourra utiliser une amine telle que la triéthylamine.

Selon d'autres variantes, le procédé peut également comprendre une étape de fonctionnalisation intermédiaire de l'élastomère diénique vivant par un organosilane cyclique, par exemple l'hexaméthylcyclotrisiloxane, qui est effectuée

(comme décrit dans le brevet FR2918064B1) pour obtenir un polymère avec une extrémité de chaîne silanolate de lithium avant réaction avec l'agent de fonctionnalisation de formule générale (III). On notera que cette fonctionnalisation intermédiaire permet de limiter les réactions de polysubstitution dans le cas où l'agent de fonctionnalisation de formule générale (III) comporte plusieurs sites réactifs sur le même atome. Cette fonctionnalisation intermédiaire est donc avantageusement mise en oeuvre dans ce cas.

Le procédé de l'invention peut comprendre, selon une autre variante, une étape supplémentaire de fonctionnalisation, de couplage et/ou d'étoilage, connue de l'homme du métier, mettant en oeuvre un composé autre qu'un organosiloxane cyclique et différent de l'agent de fonctionnalisation de formule générale (III), par exemple un agent de couplage et/ou d'étoilage comprenant un atome du groupe IV de la classification périodique des éléments, tel que notamment un dérivé à base d'étain. On notera que cette modification supplémentaire de l'élastomère diénique peut être avantageusement mise en oeuvre pour réguler le fluage à froid du copolymère à blocs de l'invention. Cette modification est avantageusement mise en oeuvre avant l'étape de modification avec le polyéther fonctionnel.

Les étapes de ces différentes variantes sont combinables entre elles.

Il est connu de l'homme du métier, que, lors d'une modification d'un élastomère diénique vivant porteur d'un site actif obtenu à l'étape de polymérisation anionique par un agent de fonctionnalisation lui-même porteur de plusieurs sites réactifs, plusieurs espèces élastomériques sont recouvrées (élastomère fonctionnalisé en bout de chaîne, élastomère non fonctionnalisé, élastomère couplé, étoilé). Le rapport molaire de l'agent de fonctionnalisation au métal de l'initiateur de polymérisation permet de moduler et de contrôler les proportions des différentes espèces au sein du mélange élastomérique. Ainsi, dans le cadre de l'invention, avec un rapport de l'agent de fonctionnalisation au métal de l'initiateur de polymérisation variant de 0,40 à 0,60, on privilégie la formation d'espèces couplées, alors majoritaires au sein de l'élastomère modifié.

Un autre objet de l'invention est une composition de caoutchouc renforcée à base d'au moins une charge renforçante et une matrice élastomère comprenant au moins un élastomère diénique tribloc tel que décrit plus haut. Il doit être entendu que la composition de caoutchouc peut comprendre un ou plusieurs de ces élastomères diéniques tribloc selon l'invention.

La composition de caoutchouc renforcée selon l'invention peut se présenter à l'état réticulé ou à l'état non réticulé, autrement dit réticulable.

L'élastomère diénique tribloc selon l'invention peut être, selon différentes variantes, utilisé seul dans la composition ou en coupage avec au moins un autre élastomère diénique conventionnel, qu'il soit étoilé, couplé, fonctionnalisé ou non. Préférentiellement, cet autre élastomère diénique utilisé dans l'invention est choisi dans le groupe des élastomères diéniques fortement insaturés constitué par les polybutadiènes (BR) les polyisoprènes (IR) de synthèse, le caoutchouc naturel (NR), les copolymères de butadiène, les copolymères d'isoprène et les mélanges de ces élastomères. De tels copolymères sont plus préférentiellement choisis dans le groupe constitué par les copolymères de butadiène-styrène (SBR), les copolymères d'isoprène-butadiène (BIR), les copolymères d'isoprène-styrène (SIR) et les copolymères d'isoprène-butadiène-styrène (SBIR). On peut également envisager un coupage avec tout élastomère synthétique autre que diénique, voire avec tout polymère autre qu'élastomère, par exemple un polymère thermoplastique.

On notera que l'amélioration des propriétés de la composition selon l'invention sera d'autant plus élevée que la proportion du ou des élastomères différents des élastomères diéniques tribloc de l'invention dans cette composition sera réduite.

Ainsi, de préférence, la matrice élastomère comprend à titre majoritaire l'élastomère diénique tribloc selon l'invention.

Lorsque l'élastomère conventionnel utilisé en coupage est du caoutchouc naturel et/ou un ou plusieurs polymères diéniques comme par exemple les polybutadiènes, les polyisoprènes, les copolymères butadiène- styrène ou butadiène-styrène-isoprène, cet élastomère ou ces élastomères peuvent alors être présents de 1 à 70 parties en poids pour 100 parties d'élastomère diénique tribloc selon l'invention.

Plus préférentiellement, la matrice élastomère est uniquement constituée de l'élastomère diénique tribloc selon l'invention.

La composition de caoutchouc de l'invention comprend, outre au moins une matrice élastomère telle que décrit ci-dessus, au moins une charge renforçante.

On peut utiliser tout type de charge renforçante connue pour ses capacités à renforcer une composition de caoutchouc utilisable pour la fabrication de bandes de roulement de pneumatiques, par exemple du noir de carbone, une charge inorganique renforçante telle que de la silice à laquelle est associé de manière connue un agent de couplage, ou encore un mélange de ces deux types de charge.

Comme noirs de carbone conviennent tous les noirs de carbone, utilisés individuellement ou sous forme de mélanges, notamment les noirs du type HAF, ISAF, SAF conventionnellement utilisés dans les bandes de roulement des pneumatiques (noirs dits de grade pneumatique). Parmi ces derniers, on citera plus particulièrement les noirs de carbone renforçants des séries 100, 200 ou 300 (grades ASTM), comme par exemple les noirs N115, N134, N234, N326, N330, N339, N347, N375. Les noirs de carbone pourraient être par exemple déjà incorporés à l'élastomère

isoprénique sous la forme d'un masterbatch (voir par exemple demandes WO 97/36724 ou WO 99/16600).

Comme charge inorganique renforçante, doit être entendu dans la présente demande, par définition, toute charge inorganique ou minérale quelles que soient sa couleur et son origine (naturelle ou de synthèse), capable de renforcer à elle seule, sans autre moyen qu'un agent de couplage intermédiaire, une composition de caoutchouc destinée à la fabrication de pneumatiques; une telle charge se caractérise généralement, de manière connue, par la présence de groupes hydroxyle (-OH) à sa surface.

Comme charges inorganiques renforçantes conviennent notamment des charges minérales du type siliceux, en particulier de la silice ($SiO_2$), ou du type alumineuse, en particulier de l'alumine ($Al_2O_3$). La silice utilisée peut être toute silice renforçante connue de l'homme du métier, notamment toute silice précipitée ou pyrogénée présentant une surface BET ainsi qu'une surface spécifique CTAB toutes deux inférieures à 450 $m^2$/g, de préférence de 30 à 400 $m^2$/g, notamment entre 60 et 300 m2/g. On citera également les charges minérales du type alumineux, en particulier de l'alumine ($Al_2O_3$) ou des (oxyde)hydroxydes d'aluminium, ou encore des oxydes de titane renforçants, par exemple décrits dans US 6 610 261 et US 6 747 087. Comme charges renforçantes conviennent également des charges renforçantes d'une autre nature, notamment du noir de carbone, dès lors que ces charges renforçantes seraient recouvertes d'une couche siliceuse, ou bien comporteraient à leur surface des sites fonctionnels, notamment hydroxyles, nécessitant l'utilisation d'un agent de couplage pour établir la liaison entre la charge et l'élastomère. A titre d'exemple, on peut citer par exemple des noirs de carbone pour pneumatiques tels que décrits par exemple dans les documents brevet WO 96/37547, WO 99/28380.

L'état physique sous lequel se présente la charge inorganique renforçante est indifférent, que ce soit sous forme de poudre, de microperles, de granulés, de billes ou toute autre forme densifiée appropriée. Bien entendu, on entend également par charge inorganique renforçante des mélanges de différentes charges renforçantes, en particulier de charges siliceuses hautement dispersibles telles que décrites précédemment.

De manière préférentielle, le taux de charge renforçante totale (noir de carbone et/ou autre charge renforçante telle que silice) est compris entre 10 et 200 pce, plus préférentiellement entre 30 et 150 pce, et encore plus préférentiellement entre 70 et 130 pce, l'optimum étant de manière connue différent selon les applications particulières visées.

Selon une variante de l'invention, la charge renforçante est majoritairement autre que du noir de carbone, c'est-à-dire qu'elle comprend plus de 50% en poids du poids total de la charge, d'une ou de plusieurs charges autres que du noir de carbone, notamment une charge inorganique renforçante telle que la silice, voire elle est exclusivement constituée d'une telle charge.

Selon cette variante, lorsque du noir de carbone est également présent, il peut être utilisé à un taux inférieur à 20 pce, plus préférentiellement inférieur à 10 pce (par exemple entre 0,5 et 20 pce, notamment de 1 à 10 pce).

Selon une autre variante de l'invention, on utilise une charge renforçante comportant majoritairement du noir de carbone, et optionnellement de la silice ou une autre charge inorganique.

Lorsque la charge renforçante comprend une charge nécessitant l'utilisation d'un agent de couplage pour établir la liaison entre la charge et l'élastomère, la composition de caoutchouc selon l'invention comprend en outre, de manière classique, un agent susceptible d'assurer efficacement cette liaison. Lorsque la silice est présente dans la composition à titre de charge renforçante, on peut utiliser comme agents de couplage des organosilanes, notamment des alkoxysilanes polysulfurés ou des mercaptosilanes, ou encore des polyorganosiloxanes au moins bifonctionnels.

Dans la composition selon l'invention, le taux d'agent de couplage est avantageusement inférieur à 20 pce, étant entendu qu'il est en général souhaitable d'en utiliser le moins possible. Son taux est préférentiellement compris entre 0,5 et 12 pce. La présence de l'agent de couplage dépend de celle de la charge inorganique renforçante. Son taux est aisément ajusté par l'homme du métier selon le taux de cette charge; il est typiquement de l'ordre de 0,5% à 15% en poids par rapport à la quantité de charge inorganique renforçante autre que du noir de carbone.

La composition de caoutchouc selon l'invention peut également contenir, en complément des agents de couplage, des activateurs de couplage, des agents de recouvrement des charges ou plus généralement des agents d'aide à la mise en oeuvre susceptibles de manière connue, grâce à une amélioration de la dispersion de la charge dans la matrice de caoutchouc et à un abaissement de la viscosité de la composition, d'améliorer sa faculté de mise en oeuvre à l'état cru, ces agents étant par exemple des silanes hydrolysables tels que des alkylalkoxysilanes, des polyols, des polyéthers, des amines primaires, secondaires ou tertiaires, des polyorganosiloxanes hydroxylés ou hydrolysables.

Les compositions de caoutchouc conformes à l'invention peuvent également contenir, des charges organiques renforçantes qui peuvent remplacer tout ou partie des noirs de carbone ou des autres charges inorganiques renforçantes décrites plus haut. Comme exemples de charges organiques renforçantes, on peut citer les charges organiques de polyvinyle fonctionnalisé telles que décrites dans les demandes WO-A-2006/069792, WO-A-2006/069793, WO-A-2008/003434 et WO-A-2008/003435.

La composition de caoutchouc selon l'invention peut comporter également tout ou partie des additifs usuels habituellement utilisés dans les compositions d'élastomères destinées à la fabrication de pneumatiques, comme par exemple des pigments, des charges non renforçantes, des agents de protection tels que cires anti-ozone, anti-ozonants chimiques, anti-oxydants, des agents anti-fatigue, des agents plastifiants, des résines renforçantes ou plastifiantes, des

accepteurs (par exemple résine phénolique novolaque) ou des donneurs de méthylène (par exemple HMT ou H3M) tels que décrits par exemple dans la demande WO 02/10269, un système de réticulation à base soit de soufre, soit de donneurs de soufre et/ou de peroxyde et/ou de bismaléimides, des accélérateurs de vulcanisation, des activateurs de vulcanisation.

La composition est fabriquée dans des mélangeurs appropriés, en utilisant deux phases de préparation successives bien connues de l'homme du métier : une première phase de travail ou malaxage thermomécanique (phase dite "non-productive") à haute température, jusqu'à une température maximale comprise entre 110°C et 190°C, de préférence entre 130°C et 180°C, suivie d'une seconde phase de travail mécanique (phase dite "productive") jusqu'à une plus basse température, typiquement inférieure à 110°C, par exemple entre 40°C et 100°C, phase de finition au cours de laquelle est incorporé le système de réticulation.

Le procédé de préparation d'une composition selon l'invention, comprend généralement :

(i) la réalisation, à une température maximale comprise entre 130 °C et 200 °C, d'un premier temps de travail thermomécanique des constituants de la composition comprenant l'élastomère diénique tribloc selon l'invention et une charge renforçante, à l'exception d'un système de réticulation, puis

(ii) la réalisation, à une température inférieure à ladite température maximale dudit premier temps, d'un second temps de travail mécanique au cours duquel est incorporé ledit système de réticulation.

Ce procédé peut également comprendre, préalablement à la réalisation des étapes (i) et (ii) précitées, les étapes de la préparation de l'élastomère diénique tribloc.

L'invention a également pour objet un article semi-fini en caoutchouc pour pneumatique, comprenant une composition de caoutchouc selon l'invention, réticulable ou réticulée ou constitué d'une telle composition.

La composition finale ainsi obtenue peut ensuite être calandrée, par exemple sous la forme d'une feuille, d'une plaque ou encore extrudée, par exemple pour former un profilé de caoutchouc utilisable comme produit semi-fini en caoutchouc destiné au pneumatique. Un tel produit semi-fini fait également l'objet de l'invention.

En raison de l'amélioration du compromis hystérèse / mise en oeuvre à cru / rigidité qui caractérise une composition de caoutchouc renforcée selon l'invention, on notera qu'une telle composition peut constituer tout produit semi-fini du pneumatique et tout particulièrement la bande de roulement, diminuant notamment sa résistance au roulement et améliorant sa résistance à l'usure.

L'invention a donc enfin pour objet un pneumatique comportant un article semi-fini selon l'invention, en particulier une bande de roulement.

Les caractéristiques précitées de la présente invention, ainsi que d'autres, seront mieux comprises à la lecture de la description suivante de plusieurs exemples de réalisation de l'invention, donnés à titre illustratif et non limitatif.

## Exemples

### Exemples de préparation d'élastomères modifiés

**Préparation du polymère A** : SBR non fonctionnel - témoin

Dans un réacteur de 90 litres, maintenu sous une pression d'azote d'environ 2 bars, contenant 44,7 kg de méthylcyclohexane, sont injectés 1,8 kg de styrène et 4,9 kg de butadiène ainsi que 395 mL d'une solution de tétrahydrofurfuryl éther à 0,1 $mol.L^{-1}$ dans le méthylcyclohexane. Après neutralisation des impuretés dans la solution à polymériser par addition de n-butyllithium, sont ajoutés 535 mL de n-butyllithium à 0,05 $mol.L^{-1}$ dans le méthylcyclohexane. La polymérisation est conduite à 50 °C.

Après 40 minutes, le taux de conversion des monomères atteint 90 %. Ce taux est déterminé par pesée d'un extrait séché à 140 °C, sous la pression réduite de 200 mmHg. 530 mL d'une solution de méthanol à 0,15 $mol.L^{-1}$ dans le toluène sont alors ajoutés. La solution est ensuite antioxydée par addition de 0,8 partie pour cent parties d'élastomère (pce) de 4,4'-méthylène-bis-2,6-tert-butylphénol et de 0,2 partie pour cent parties d'élastomère (pce) de N-(1,3-diméthylbutyl)-N'-phényl-p-phénylènediamine. Le copolymère ainsi traité est séparé de sa solution par une opération de stripping à la vapeur d'eau, puis séché sur outils à cylindre à 100 °C pendant 15 minutes.

La viscosité Mooney du polymère est de 60.

La masse molaire moyenne en nombre, $M_n$, de ce copolymère, déterminée par la technique SEC, est de 192 000 $g.mol^{-1}$ et l'indice de polymolécularité, Ip, est de 1,07.

La microstructure de ce copolymère est déterminée par la méthode NIR. Le taux de motifs 1,2 est de 59 % par rapport aux unités butadiène. Le taux massique de styrène est de 25 %.

La température de transition vitreuse de ce copolymère est de - 24 °C.

**Préparation du polymère B** : SBR fonctionnel amine en extrémité de chaîne - témoin

Dans un réacteur de 90 litres, maintenu sous une pression d'azote d'environ 2 bars, contenant 44,7 kg de méthylcyclohexane, sont injectés 1,8 kg de styrène et 4,9 kg de butadiène ainsi que 395 mL d'une solution de tétrahydrofurfuryl éther à 0,1 $mol.L^{-1}$ dans le méthylcyclohexane. Après neutralisation des impuretés dans la solution à polymériser par addition de n-butyllithium, sont ajoutés 1,07 L d'hexaméthylèneamine lithiée à 0,05 $mol.L^{-1}$ dans le méthylcyclohexane. La polymérisation est conduite à 50 °C.

Après 32 minutes, le taux de conversion des monomères atteint 90 %. Ce taux est déterminé par pesée d'un extrait séché à 140 °C, sous la pression réduite de 200 mmHg. Un échantillon témoin est alors prélevé depuis le réacteur puis stoppé avec un excès de méthanol par rapport au lithium. La viscosité inhérente (viscosité "initiale"), laquelle est mesurée à 25 °C à 0,1 $g.L^{-1}$ dans le toluène, est de 1,10 $dL.g^{-1}$. 268 mL d'une solution de diméthyldichlorosilane à 0,1 $mol.L^{-1}$ dans le méthylcyclohexane sont ajoutés. Après 20 minutes de réaction à 50 °C, la solution est antioxydée par addition de 0,8 partie pour cent parties d'élastomère (pce) de 4,4'-méthylène-bis-2,6-tert-butylphénol et de 0,2 partie pour cent parties d'élastomère (pce) de N-(1,3-diméthylbutyl)-N'-phényl-p-phénylènediamine. Le copolymère ainsi traité est séparé de sa solution par une opération de stripping à la vapeur d'eau, puis séché sur outils à cylindre à 100 °C pendant 15 minutes.

La viscosité inhérente "finale" mesurée est de 1,80 $dL.g^{-1}$. Le saut de viscosité, défini comme le rapport de ladite viscosité "finale" sur ladite viscosité "initiale", est ici de 1,63. La viscosité Mooney du polymère ainsi couplé est de 59.

La masse molaire moyenne en nombre, $M_n$, de ce copolymère, déterminée par la technique SEC, est de 188 000 $g.mol^{-1}$ et l'indice de polymolécularité, Ip, est de 1,09.

La microstructure de ce copolymère est déterminée par la méthode NIR. Le taux de motifs 1,2 est de 60 % par rapport aux unités butadiène. Le taux massique de styrène est de 25 %.

La température de transition vitreuse de ce copolymère est de - 24 °C.

**Préparation du polymère C** : SBR fonctionnel silanol + polyéther en milieu de chaîne - témoin

Dans un réacteur de 90 litres, maintenu sous une pression d'azote d'environ 2 bars, contenant 44,7 kg de méthylcyclohexane, sont injectés 1,8 kg de styrène et 4,9 kg de butadiène ainsi que 395 mL d'une solution de tetrahydrofurfuryl ether à 0,1 $mol.L^{-1}$ dans le méthylcyclohexane. Après neutralisation des impuretés dans la solution à polymériser par addition de n-butyllithium, sont ajoutés 1,07 L de n-butyllithium à 0,05 $mol.L^{-1}$ dans le méthylcyclohexane. La polymérisation est conduite à 50 °C.

Après 30 minutes, le taux de conversion des monomères atteint 90 %. Ce taux est déterminé par pesée d'un extrait séché à 140 °C, sous la pression réduite de 200 mmHg. Un échantillon témoin est alors prélevé depuis le réacteur puis stoppé avec un excès de méthanol par rapport au lithium. La viscosité inhérente (viscosité "initiale"), laquelle est mesurée à 25 °C à 0,1 $g.dL^{-1}$ dans le toluène, est de 1,10 $dL.g^{-1}$. 268 mL d'une solution de poly(oxy-1,2-éthanediyl), $\alpha$-[3-(dichlorométhylsilyl)propyl]-$\omega$-[3-(dichlorométhylsilyl)propoxy] à 0,1 $mol.L^{-1}$ dans le diéthyl éther sont ajoutés. Après 90 minutes de réaction à 50 °C, un excès d'eau est ajouté afin de neutraliser les fonctions SiCl présentes sur les chaînes polymère. La solution est ensuite antioxydée par addition de 0,8 partie pour cent parties d'élastomère (pce) de 4,4'-méthylène-bis-2,6-tert-butylphénol et de 0,2 partie pour cent parties d'élastomère (pce) de N-(1,3-diméthylbutyl)-N'-phényl-p-phénylènediamine. Le copolymère ainsi traité est séparé de sa solution par une opération de stripping à la vapeur d'eau, puis séché sur outils à cylindre à 100 °C pendant 15 minutes.

La viscosité inhérente "finale" mesurée est de 1,76 $dL.g^{-1}$. Le saut de viscosité, défini comme le rapport de ladite viscosité "finale" sur ladite viscosité "initiale", est ici de 1,60. La viscosité Mooney du polymère ainsi couplé est de 59.

La masse molaire moyenne en nombre, $M_n$, de ce copolymère, déterminée par la technique SEC, est de 186 000 $g.mol^{-1}$ et l'indice de polymolécularité, Ip, est de 1,15.

La microstructure de ce copolymère est déterminée par la méthode NIR. Le taux de motifs 1,2 est de 60 % par rapport aux unités butadiène. Le taux massique de styrène est de 25 %.

La température de transition vitreuse de ce copolymère est de - 24 °C.

**Préparation du polymère D :** SBR fonctionnel silanol en milieu de chaîne - témoin

Dans un réacteur de 90 litres, maintenu sous une pression d'azote d'environ 2 bars, contenant 44,7 kg de méthylcyclohexane, sont injectés 1,8 kg de styrène et 4,9 kg de butadiène ainsi que 395 mL d'une solution de tetrahydrofurfuryl ether à 0,1 $mol.L^{-1}$ dans le méthylcyclohexane. Après neutralisation des impuretés dans la solution à polymériser par addition de n-butyllithium, sont ajoutés 1,07 L de n-butyllithium à 0,05 $mol.L^{-1}$ dans le méthylcyclohexane. La polymérisation est conduite à 50 °C.

Après 30 minutes, le taux de conversion des monomères atteint 90 %. Ce taux est déterminé par pesée d'un extrait séché à 140 °C, sous la pression réduite de 200 mmHg. Un échantillon témoin est alors prélevé depuis le réacteur

puis stoppé avec un excès de méthanol par rapport au lithium. La viscosité inhérente (viscosité "initiale"), laquelle est mesurée à 25 °C à 0,1 g.L$^{-1}$ dans le toluène, est de 1,10 dL.g$^{-1}$. 268 mL d'une solution de méthyltrichlorosilane à 0,1 mol.L$^{-1}$ dans le méthylcyclohexane sont ajoutés. Après 20 minutes de réaction à 0 °C, un excès d'eau est ajouté pour hydrolyser les fonctions SiCl présentes sur les chaînes polymère. La solution est ensuite antioxydée par addition de 0,8 partie pour cent parties d'élastomère (pce) de 4,4'-méthylène-bis-2,6-tert-butylphénol et de 0,2 partie pour cent parties d'élastomère (pce) de N-(1,3-diméthylbutyl)-N'-phényl-p-phénylènediamine. Le copolymère ainsi traité est séparé de sa solution par une opération de stripping à la vapeur d'eau, puis séché sur outils à cylindre à 100 °C pendant 15 minutes.

La viscosité inhérente "finale" mesurée est de 1,80 dL.g$^{-1}$. Le saut de viscosité, défini comme le rapport de ladite viscosité "finale" sur ladite viscosité "initiale", est ici de 1,64. La viscosité Mooney du polymère ainsi couplé est de 60.

La masse molaire moyenne en nombre, $M_n$, de ce copolymère, déterminée par la technique SEC, est de 190 000 g.mol$^{-1}$ et l'indice de polymolécularité, Ip, est de 1,10.

Le pourcentage massique d'espèces couplées, déterminé par la technique de SEC haute résolution, est de 82 %.

La microstructure de ce copolymère est déterminée par la méthode NIR. Le taux de motifs 1,2 est de 60 % par rapport aux unités butadiène. Le taux massique de styrène est de 25 %.

La température de transition vitreuse de ce copolymère est de - 24 °C.

**Préparation du polymère E** : SBR fonctionnel aminoalcoxysilane en milieu de chaîne - témoin

Dans un réacteur de 90 litres, maintenu sous une pression d'azote d'environ 2 bars, contenant 44,7 kg de méthylcyclohexane, sont injectés 1,8 kg de styrène et 4,9 kg de butadiène ainsi que 395 mL d'une solution de tétrahydrofurfuryl éther à 0,1 mol.L$^{-1}$ dans le méthylcyclohexane. Après neutralisation des impuretés dans la solution à polymériser par addition de n-butyllithium, sont ajoutés 1,07 L de n-butyllithium à 0,05 mol.L$^{-1}$ dans le méthylcyclohexane. La polymérisation est conduite à 50 °C.

Après 30 minutes, le taux de conversion des monomères atteint 90 %. Ce taux est déterminé par pesée d'un extrait séché à 140 °C, sous la pression réduite de 200 mmHg. Un échantillon témoin est alors prélevé depuis le réacteur puis stoppé avec un excès de méthanol par rapport au lithium. La viscosité inhérente (viscosité "initiale"), laquelle est mesurée à 25 °C à 0,1 g.dL$^{-1}$ dans le toluène, est de 1,11 dL.g$^{-1}$. 268 mL d'une solution de 3-(N,N-diméthylaminopropyl)triméthoxysilane à 0,1 mol.L$^{-1}$ dans le méthylcyclohexane sont ajoutés. Après 20 minutes de réaction à 50 °C, la solution est ensuite antioxydée par addition de 0,8 partie pour cent parties d'élastomère (pce) de 4,4'-méthylène-bis-2,6-tert-butylphénol et de 0,2 partie pour cent parties d'élastomère (pce) de N-(1,3-diméthylbutyl)-N'-phényl-p-phénylènediamine. Le copolymère ainsi traité est séparé de sa solution par une opération de stripping à la vapeur d'eau, puis séché sur outils à cylindre à 100 °C pendant 15 minutes.

La viscosité inhérente "finale" mesurée est de 1,78 dL.g$^{-1}$. Le saut de viscosité, défini comme le rapport de ladite viscosité "finale" sur ladite viscosité "initiale", est ici de 1,60. La viscosité Mooney du polymère ainsi couplé est de 59.

La masse molaire moyenne en nombre, $M_n$, de ce copolymère, déterminée par la technique SEC, est de 187 000 g.mol$^{-1}$ et l'indice de polymolécularité, Ip, est de 1,13.

Le pourcentage massique d'espèces couplées, déterminé par la technique de SEC haute résolution, est de 85 %.

La microstructure de ce copolymère est déterminée par la méthode NIR. Le taux de motifs 1,2 est de 60 % par rapport aux unités butadiène. Le taux massique de styrène est de 25 %.

La température de transition vitreuse de ce copolymère est de - 24 °C.

**Préparation du polymère F** : SBR fonctionnel époxyde + alcoxysilane en milieu de chaîne - témoin

Dans un réacteur de 90 litres, maintenu sous une pression d'azote d'environ 2 bars, contenant 44,7 kg de méthylcyclohexane, sont injectés 1,8 kg de styrène et 4,9 kg de butadiène ainsi que 395 mL d'une solution de tetrahydrofurfuryl ether à 0,1 mol.L$^{-1}$ dans le méthylcyclohexane. Après neutralisation des impuretés dans la solution à polymériser par addition de n-butyllithium, sont ajoutés 1,07 L de n-butyllithium à 0,05 mol.L$^{-1}$ dans le méthylcyclohexane. La polymérisation est conduite à 50 °C.

Après 30 minutes, le taux de conversion des monomères atteint 90 %. Ce taux est déterminé par pesée d'un extrait séché à 140 °C, sous la pression réduite de 200 mmHg. Un échantillon témoin est alors prélevé depuis le réacteur puis stoppé avec un excès de méthanol par rapport au lithium. La viscosité inhérente (viscosité "initiale"), laquelle est mesurée à 25 °C à 0,1 g.dL$^{-1}$ dans le toluène, est de 1,10 dL.g$^{-1}$. 268 mL d'une solution de 3-(glycidyloxypropyl)triméthoxysilane à 0,1 mol.L$^{-1}$ dans le méthylcyclohexane sont ajoutés. Après 20 minutes de réaction à 50 °C, la solution est ensuite antioxydée par addition de 0,8 partie pour cent parties d'élastomère (pce) de 4,4'-méthylène-bis-2,6-tert-butylphénol et de 0,2 partie pour cent parties d'élastomère (pce) de N-(1,3-diméthylbutyl)-N'-phényl-p-phénylènediamine. Le copolymère ainsi traité est séparé de sa solution par une opération de stripping à la vapeur d'eau, puis séché sur outils à cylindre à 100 °C pendant 15 minutes.

La viscosité inhérente "finale" mesurée est de 1,77 dL.g$^{-1}$. Le saut de viscosité, défini comme le rapport de

ladite viscosité "finale" sur ladite viscosité "initiale", est ici de 1,61. La viscosité Mooney du polymère ainsi couplé est de 58.

La masse molaire moyenne en nombre, $M_n$, de ce copolymère, déterminée par la technique SEC, est de 186 000 $g.mol^{-1}$ et l'indice de polymolécularité, Ip, est de 1,14.

Le pourcentage massique d'espèces couplées, déterminé par la technique de SEC haute résolution, est de 86 %.

La microstructure de ce copolymère est déterminée par la méthode NIR. Le taux de motifs 1,2 est de 60 % par rapport aux unités butadiène. Le taux massique de styrène est de 25 %.

La température de transition vitreuse de ce copolymère est de - 24 °C.

**Préparation du polymère G** : SBR fonctionnel silanol en extrémité de chaîne - témoin

Dans un réacteur de 90 litres, maintenu sous une pression d'azote d'environ 2 bars, contenant 44,7 kg de méthylcyclohexane, sont injectés 1,8 kg de styrène et 4,9 kg de butadiène ainsi que 395 mL d'une solution de tétrahydrofurfuryl éther à 0,1 $mol.L^{-1}$ dans le méthylcyclohexane. Après neutralisation des impuretés dans la solution à polymériser par addition de n-butyllithium, sont ajoutés 535 mL de n-butyllithium à 0,05 $mol.L^{-1}$ dans le méthylcyclohexane. La polymérisation est conduite à 50 °C.

Après 40 minutes, le taux de conversion des monomères atteint 90 %. Ce taux est déterminé par pesée d'un extrait séché à 140 °C, sous la pression réduite de 200 mmHg. 134 mL d'une solution d'hexaméthylcyclotrisiloxane à 0,1 $mol.L^{-1}$ dans le méthylcyclohexane sont alors ajoutés. Après 30 minutes à 60 °C, 535 mL d'une solution de méthanol dans le toluène à 0,15 $mol.L^{-1}$ sont alors ajoutés. La solution est ensuite antioxydée par addition de 0,8 partie pour cent parties d'élastomère (pce) de 4,4'-méthylène-bis-2,6-tert-butylphénol et de 0,2 partie pour cent parties d'élastomère (pce) de N-(1,3-diméthylbutyl)-N'-phényl-p-phénylènediamine. Le copolymère ainsi traité est séparé de sa solution par une opération de stripping à la vapeur d'eau, puis séché sur outils à cylindre à 100 °C pendant 15 minutes.

La viscosité Mooney du polymère est de 59.

La masse molaire moyenne en nombre, $M_n$, de ce copolymère, déterminée par la technique SEC, est de 190 000 $g.mol^{-1}$ et l'indice de polymolécularité, Ip, est de 1,05

La microstructure de ce copolymère est déterminée par la méthode NIR. Le taux de motifs 1,2 est de 59 % par rapport aux unités butadiène. Le taux massique de styrène est de 25 %.

La température de transition vitreuse de ce copolymère est de - 24 °C.

**Préparation du polymère H** : SBR fonctionnel amine en extrémité de chaîne et fonctionnel silanol + polyéther en milieu de chaîne selon l'invention

Dans un réacteur de 90 litres, maintenu sous une pression d'azote d'environ 2 bars, contenant 44,7 kg de méthylcyclohexane, sont injectés 1,8 kg de styrène et 4,9 kg de butadiène ainsi que 395 mL d'une solution de tétrahydrofurfuryl éther à 0,1 $mol.L^{-1}$ dans le méthylcyclohexane. Après neutralisation des impuretés dans la solution à polymériser par addition de n-butyllithium, sont ajoutés 1,07 L d'hexaméthylèneamine lithiée à 0,05 $mol.L^{-1}$ dans le méthylcyclohexane. La polymérisation est conduite à 50 °C.

Après 30 minutes, le taux de conversion des monomères atteint 90 %. Ce taux est déterminé par pesée d'un extrait séché à 140 °C, sous la pression réduite de 200 mmHg. Un échantillon témoin est alors prélevé depuis le réacteur puis stoppé avec un excès de méthanol par rapport au lithium. La viscosité inhérente (viscosité "initiale"), laquelle est mesurée à 25 °C à 0,1 $g.dL^{-1}$ dans le toluène, est de 1,09 $dL.g^{-1}$. 268 mL d'une solution de poly(oxy-1,2-éthanediyl), $\alpha$-[3-(dichlorométhylsilyl)propyl]-$\omega$-[3-(dichlorométhylsilyl)propoxy] à 0,1 $mol.L^{-1}$ dans le diéthyl éther sont ajoutés. Après 90 minutes de réaction à 50 °C, un excès d'eau est ajouté afin de neutraliser les fonctions SiCl présentes sur les chaînes polymère. La solution est ensuite antioxydée par addition de 0,8 partie pour cent parties d'élastomère (pce) de 4,4'-méthylène-bis-2,6-tert-butylphénol et de 0,2 partie pour cent parties d'élastomère (pce) de N-(1,3-diméthylbutyl)-N'-phényl-p-phénylènediamine. Le copolymère ainsi traité est séparé de sa solution par une opération de stripping à la vapeur d'eau, puis séché sur outils à cylindre à 100 °C pendant 15 minutes.

La viscosité inhérente "finale" mesurée est de 1,74 $dL.g^{-1}$. Le saut de viscosité, défini comme le rapport de ladite viscosité "finale" sur ladite viscosité "initiale", est ici de 1,60. La viscosité Mooney du polymère ainsi couplé est de 58.

La masse molaire moyenne en nombre, $M_n$, de ce copolymère, déterminée par la technique SEC, est de 183 000 $g.mol^{-1}$ et l'indice de polymolécularité, Ip, est de 1,15.

La microstructure de ce copolymère est déterminée par la méthode NIR. Le taux de motifs 1,2 est de 60 % par rapport aux unités butadiène. Le taux massique de styrène est de 25 %.

La température de transition vitreuse de ce copolymère est de - 24 °C.

**Mesures et tests utilisés**

Chromatographie d'exclusion stérique

La technique SEC (Size Exclusion Chromatography) permet de séparer les macromolécules en solution suivant leur taille à travers des colonnes remplies d'un gel poreux. Les macromolécules sont séparées suivant leur volume hydrodynamique, les plus volumineuses étant éluées en premier.

Sans être une méthode absolue, la SEC permet d'appréhender la distribution des masses molaires d'un polymère. A partir de produits étalons commerciaux, les différentes masses molaires moyennes en nombre (Mn) et en poids (Mw) peuvent être déterminées et l'indice de polymolécularité (Ip = Mw/Mn) calculé via un étalonnage dit de MOORE.

Il n'y a pas de traitement particulier de l'échantillon de polymère avant analyse. Celui-ci est simplement solubilisé dans le solvant d'élution à une concentration d'environ 1 $g.L^{-1}$. Puis la solution est filtrée sur filtre de porosité 0,45$\mu$m avant injection.

L'appareillage utilisé est une chaîne chromatographique "WATERS alliance". Le solvant d'élution est soit le tétrahydrofurane, soit le tétrahydrofurane + 1%vol. de diisopropylamine + 1%vol. de triethylamine, le débit de 1 $mL.min^{-1}$, la température du système de 35° C et la durée d'analyse de 30 min. Un jeu de deux colonnes WATERS de dénomination commerciale "STYRAGEL HT6E" est utilisé. Le volume injecté de la solution de l'échantillon de polymère est 100 $\mu$L. Le détecteur est un réfractomètre différentiel "WATERS 2410" et le logiciel d'exploitation des données chromatographiques est le système "WATERS EMPOWER".

Les masses molaires moyennes calculées sont relatives à une courbe d'étalonnage réalisée pour des SBR de microstructure suivante : 25% massique de motifs type styrène, 23% massique de motifs type 1-2 et 50% massique de motifs type 1-4 trans.

Chromatographie d'exclusion stérique haute résolution

La technique de SEC haute résolution est utilisée pour déterminer les pourcentages massiques des différentes populations de chaînes présentes dans un échantillon de polymère.

Il n'y a pas de traitement particulier de l'échantillon de polymère avant analyse. Celui-ci est simplement solubilisé dans le solvant d'élution à une concentration d'environ 1 $g.L^{-1}$. Puis la solution est filtrée sur filtre de porosité 0,45 $\mu$m avant injection.

L'appareillage utilisé est une chaîne chromatographique "WATERS alliance 2695". Le solvant d'élution est le tétrahydrofurane, le débit de 0,2 $ml.min^{-1}$, la température du système de 35 °C. Un jeu de trois colonnes identiques en série est utilisé (Shodex, longueur 300 mm, diamètre 8 mm). Le nombre de plateaux théoriques du jeu de colonnes est supérieur à 22 000. Le volume injecté de la solution de l'échantillon de polymère est 50 $\mu$L. Le détecteur est un réfractomètre différentiel "WATERS 2414" et le logiciel d'exploitation des données chromatographiques est le système "WATERS EMPOWER".

Les masses molaires calculées sont relatives à une courbe d'étalonnage réalisée pour des SBR de microstructure suivante : 25 % massique de motifs type styrène, 23 % massique de motifs type 1,2 et 50 % massique de motifs type 1,4-trans.

Viscosité Mooney

Pour les polymères et les compositions de caoutchouc, les viscosités Mooney $ML_{(1+4)}$100 °C sont mesurées selon la norme ASTM D-1646.

Un consistomètre oscillant est utilisé tel que décrit dans la norme ASTM D-1646. La mesure de plasticité Mooney se fait selon le principe suivant : la composition à l'état cru (i.e. avant cuisson) est moulée dans une enceinte cylindrique chauffée à 100 °C. Après une minute de préchauffage, le rotor tourne au sein de l'éprouvette à 2 tours/minute et le couple utile pour entretenir ce mouvement après 4 minutes de rotation est mesuré. La plasticité Mooney $ML_{(1+4)}$ est exprimée en "unité Mooney" (UM, avec 1 UM = 0,83 N.m).

Calorimétrie différentielle

Les températures de transition vitreuse (Tg) des élastomères sont déterminées à l'aide d'un calorimètre différentiel ("differential scanning calorimeter").

Spectroscopie proche infrarouge (NIR)

La microstructure des élastomères est caractérisée par la technique de spectroscopie proche infrarouge (NIR).

La spectroscopie proche infrarouge (NIR) est utilisée pour déterminer quantitativement le taux massique de styrène dans l'élastomère ainsi que sa microstructure (répartition relative des unités butadiène 1,2, 1,4-trans et 1,4 cis). Le principe de la méthode repose sur la loi de Beer-Lambert généralisée à un système multicomposants. La méthode étant indirecte, elle fait appel à un étalonnage multivarié [Vilmin, F.; Dussap, C.; Coste, N. Applied Spectroscopy 2006, 60, 619-29] réalisé à l'aide d'élastomères étalons de composition déterminée par RMN $^{13}C$. Le taux de styrène et la microstructure sont alors calculés à partir du spectre NIR d'un film d'élastomère d'environ 730 μm d'épaisseur. L'acquisition du spectre est réalisée en mode transmission entre 4000 et 6200 $cm^{-1}$ avec une résolution de 2 $cm^{-1}$, à l'aide d'un spectromètre proche infrarouge à transformée de Fourier Bruker Tensor 37 équipé d'un détecteur InGaAs refroidi par effet Peltier.

Viscosité inhérente

La viscosité inhérente des élastomères à 25 °C est déterminée à partir d'une solution d'élastomère à 0,1 $g.dL^{-1}$ dans le toluène, selon le principe suivant :

La viscosité inhérente est déterminée par la mesure du temps d'écoulement *t* de la solution de polymère et du temps d'écoulement $t_o$ du toluène, dans un tube capillaire.

Dans un tube Ubbelhode (diamètre du capillaire 0,46 mm, capacité 18 à 22 mL), placé dans un bain thermostaté à 25 ± 0,1 °C, le temps d'écoulement du toluène et celui de la solution polymère à 0,1 $g.dL^{-1}$ sont mesurés.

La viscosité inhérente est obtenue par la relation suivante :

$$\eta_{inh} = \frac{1}{C}\ln\left[\frac{(t)}{(t_0)}\right]$$

avec :

- C : concentration de la solution de polymère dans le toluène en $g.dL^{-1}$,
- *t* : temps d'écoulement de la solution de polymère dans le toluène en seconde,
- $t_0$ : temps d'écoulement du toluène en seconde,
- $\eta_{inh}$ : viscosité inhérente exprimée en $dL.g^{-1}$.

Propriétés dynamiques

Les propriétés dynamiques G* et tan δ max sont mesurées sur un viscoanalyseur (Metravib VA4000), selon la norme ASTM D 5992-96. On enregistre la réponse d'un échantillon de composition vulcanisée (éprouvette cylindrique de 2 mm d'épaisseur et de 79 $mm^2$ de section), soumis à une sollicitation sinusoïdale en cisaillement simple alterné, à la fréquence de 10Hz, dans les conditions normales de température (40°C) selon la norme ASTM D 1349-99. On effectue un balayage en amplitude de déformation de 0,1% à 50% crête-crête (cycle aller), puis de 50% à 0,1% crête-crête (cycle retour). Les résultats exploités sont le module complexe de cisaillement dynamique (G*) et le facteur de perte tan δ. Pour le cycle retour, on indique la valeur maximale de tan δ observée, noté tan δ max. Cette valeur est représentative de l'hystérèse du matériau et dans le cas présent de la résistance au roulement : plus la valeur de tan δ max est faible, plus la résistance au roulement est basse. Les valeurs de G* mesurées à 40°C sont représentatives de la rigidité, c'est-à-dire de la résistance à la déformation: plus la valeur de G* est élevée plus la rigidité du matériau est importante, et donc la résistance à l'usure élevée.

**Exemples comparatifs de compositions de caoutchouc**

On compare huit compositions reportées dans le Tableau 1 ci-après. Sept d'entre elles (compositions 2 à 8) sont non-conformes vis-à-vis de la composition préconisée par l'invention :

**TABLEAU 1**

| | Exemple | Exemples comparatifs | | | | | | |
|---|---|---|---|---|---|---|---|---|
| | 1 | 2 | 3 | 4 | 5 | 6 | 7 | 8 |
| Polymère A | | 100 | | | | | | |
| Polymère B | | | 100 | | | | | |
| Polymère C | | | | 100 | | | | |
| Polymère D | | | | | 100 | | | |
| Polymère E | | | | | | 100 | | |
| Polymère F | | | | | | | 100 | |
| Polymère G | | | | | | | | 100 |
| Polymère H | 100 | | | | | | | |
| Silice (1) | 80 | 80 | 80 | 80 | 80 | 80 | 80 | 80 |
| N234 | 1 | 1 | 1 | 1 | 1 | 1 | 1 | 1 |
| Huile MES (2) | 15 | 15 | 15 | 15 | 15 | 15 | 15 | 15 |
| Résine (3) | 15 | 15 | 15 | 15 | 15 | 15 | 15 | 15 |
| Agent de couplage (4) | 6,4 | 6,4 | 6,4 | 6,4 | 6,4 | 6,4 | 6,4 | 6,4 |
| ZnO | 2,5 | 2,5 | 2,5 | 2,5 | 2,5 | 2,5 | 2,5 | 2,5 |
| Acide stéarique | 2 | 2 | 2 | 2 | 2 | 2 | 2 | 2 |
| Antioxydant (5) | 1,9 | 1,9 | 1,9 | 1,9 | 1,9 | 1,9 | 1,9 | 1,9 |
| Cire anti-ozone "C32ST" (6) | 1,5 | 1,5 | 1,5 | 1,5 | 1,5 | 1,5 | 1,5 | 1,5 |
| Diphénylguanidine | 1,5 | 1,5 | 1,5 | 1,5 | 1,5 | 1,5 | 1,5 | 1,5 |
| Soufre | 1,2 | 1,2 | 1,2 | 1,2 | 1,2 | 1,2 | 1,2 | 1,2 |
| Sulfénamide (7) | 2 | 2 | 2 | 2 | 2 | 2 | 2 | 2 |

(1)Silice "Zeosil 1165MP" de Rhodia.
(2)Catenex® SBR de Shell.
(3)Polylimonène.
(4)"Si69" de Degussa.
(5)N-(1,3-diméthylbutyl)-N'-phényl-p-phénylènediamine.
(6)Anti-ozone de Repsol.
(7) N-cyclohexyl-2-benzothiazylsulphénamide.

Pour les essais qui suivent, on procède de la manière suivante:

Chacune des compositions est réalisée, dans un premier temps, par un travail thermo-mécanique, puis, dans un second temps de finition, par un travail mécanique.

On introduit dans un mélangeur interne de laboratoire de type « Banbury », dont la capacité est de 400 $cm^3$, qui est rempli à 72% et dont la température initiale est de 90°C, l'élastomère, deux tiers de la silice, l'agent de couplage, la diphénylguanidine et le noir de carbone.

Le travail thermo-mécanique est réalisé au moyen de palettes dont la vitesse moyenne est de 50 tr/min et dont la température est de 90°C.

Après une minute, on introduit le dernier tiers de silice, l'antioxydant, l'acide stéarique et la cire anti-ozone, l'huile MES et la résine, toujours sous travail thermo-mécanique.

Après deux minutes, on introduit l'oxyde de zinc, la vitesse des palettes étant de 50 tr/min.

Le travail thermo-mécanique est encore conduit pendant deux minutes, jusqu'à une température maximale de tombée de 160°C environ.

On récupère le mélange ainsi obtenu, on le refroidit puis, dans un mélangeur externe (homo-finisseur), on ajoute le soufre et la sulfénamide à 30°C, en mélangeant encore le tout pendant une durée de 3 à 4 minutes (second

temps de travail mécanique).

Les compositions ainsi obtenues sont ensuite calandrées, soit sous forme de plaques (d'une épaisseur allant de 2 à 3 mm) ou fines feuilles de caoutchouc, pour la mesure de leurs propriétés physiques ou mécaniques, soit sous la forme de profilés directement utilisables, après découpage et/ou assemblage aux dimensions souhaitées, par exemple comme produits semi-finis pour pneumatiques, en particulier pour des bandes de roulement.

La réticulation est effectuée à 150°C pendant 40 min.

Les résultats sont présentés dans le Tableau 2 et sur les Figures 1 et 2.

**TABLEAU 2**

| Résultats caoutchouterie (tan δ max 40°C, $G^*_{10\%,40°C}$, $ML_{(1+4)}100°C$) : | | | | | | | | |
|---|---|---|---|---|---|---|---|---|
| | Exemple | Exemples comparatifs | | | | | | |
| | 1 | 2 | 3 | 4 | 5 | 6 | 7 | 8 |
| Tan δ max 40°C | 0,137 | 0,3 | 0,22 | 0,16 | 0,21 | 0,165 | 0,225 | 0,22 |
| $G^*_{10\%,40°C}$ | 2,0 | 2,62 | 2,35 | 1,66 | 1,87 | 1,85 | 1,92 | 2,04 |
| $ML_{(1+4)}$ 100°C | 97 | 77 | 112 | 61 | 62 | 68 | 67 | 105 |

La Figure 1 montre que la composition 1 contenant le SBR fonctionnel amine en extrémité de chaîne et fonctionnel silanol + polyéther en milieu de chaîne H présente une valeur de tan δ max 40°C inférieure à la composition 2 comprenant le polymère témoin A (non fonctionnel), à la composition 3 comprenant le polymère témoin B (fonctionnel amine en extrémité de chaîne) et aux compositions 4-5-6-7-8 comprenant respectivement les polymères témoin C (fonctionnel silanol + polyéther en milieu de chaîne), D (fonctionnel silanol en milieu de chaîne), E (fonctionnel aminoalcoxysilane en milieu de chaîne), F (fonctionnel alcoxysilane + époxyde en milieu de chaîne), G (fonctionnel silanol en extrémité de chaîne). Cela traduit une hystérèse améliorée.

La mise en oeuvre de la composition 1 reste néanmoins tout à fait acceptable notamment au vue de la composition A qui contient un élastomère non fonctionnel habituellement utilisé dans les formulations pour semi-finis destinés à la réalisation de pneumatiques.

La Figure 2 montre que la composition 1 présente un compromis tan δ max 40 °C / $G^*_{10\%,40°C}$ décalé par rapport aux autres compositions, et en particulier par rapport à la composition 4 contenant le polymère C témoin (fonctionnel silanol + polyéther en milieu de chaîne). Cela traduit un compromis rigidité / hystérèse amélioré pour la composition 1 contenant le polymère tribloc selon l'invention.

## Revendications

1. Elastomère diénique tribloc dont le bloc central est un bloc polyéther de masse moléculaire moyenne en nombre allant de 150 à 5000 g/mol et est relié par un atome de silicium à chacun des blocs latéraux, et dont les extrémités de chaîne sont fonctionnalisées à au moins 70% molaire, par rapport au nombre de moles de bout de chaîne, par une fonction amine.

2. Elastomère diénique tribloc selon la revendication 1, **caractérisé en ce qu'**il répond à la formule (I) suivante

$$R_1\text{-}(A')_2$$

dans laquelle,

$R_1$ représente un dérivé hydrocarboné alkyle divalent en $C_1$-$C_{15}$, aryle en $C_6$-$C_{15}$ ou aralkyle en $C_7$-$C_{15}$, chaque A' représente, de manière identique ou différente, le groupe de formule générale (II) :

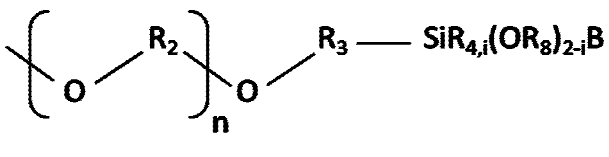

dans laquelle,

$R_2$ représente un radical alkyle divalent en $C_1$-$C_{10}$, particulièrement le radical -CH($R_6$)-CH($R_7$)- dans lequel $R_6$ et $R_7$ sont, indépendamment l'un de l'autre, un atome d'hydrogène ou un radical alkyl en $C_1$-$C_4$,
$R_3$ représente un radical alkyle divalent en $C_1$-$C_{50}$, aryle en $C_6$-$C_{50}$ ou aralkyle en $C_7$-$C_{50}$,
$R_4$ représente un radical alkyle en $C_1$-$C_{50}$, aryle en $C_6$-$C_{50}$ ou aralkyle en $C_7$-$C_{50}$,
$R_8$ représente un atome d'hydrogène ou un radical alkyle en $C_1$-$C_{18}$, cycloalkyle en $C_5$-$C_{18}$ ou aryle en $C_6$-$C_{18}$,
n est un nombre supérieur à 1,
i est un nombre entier variant de 0 à 2,
B représente le groupement -[(O-Si$R_9R_{10}$)$_q$-P], dans lequel $R_9$ et $R_{10}$ représentent, indépendamment l'un de l'autre, un radical alkyle $C_1$-$C_{50}$ ou aryle en $C_6$-$C_{50}$ ou aralkyle en $C_7$-$C_{50}$, q est un nombre entier allant de 0 à 10, et P est un élastomère diénique fonctionnalisé à au moins 70% molaire en extrémité de chaîne par une fonction amine.

3. Elastomère diénique tribloc selon la revendication 2, **caractérisé en ce que** $R_1$ représente un radical alkyle en $C_1$-$C_4$, de préférence un groupement -$CH_2$-$CH_2$- ou -$CH_2$-CH($CH_3$)-.

4. Elastomère diénique tribloc selon l'une quelconque des revendications 2 à 3, **caractérisé en ce que** n est un nombre inférieur à 120, de préférence un nombre variant de 2 à 60.

5. Elastomère diénique tribloc selon l'une quelconque des revendications 2 à 4, **caractérisé en ce que** q est un nombre entier non nul, de préférence égal à 1.

6. Procédé de préparation d'un élastomère diénique tribloc tel que défini à l'une quelconque des revendications précédentes, **caractérisé en ce qu'**il comprend :

- polymérisation anionique d'au moins un monomère diène conjugué en présence d'un initiateur de polymérisation possédant une fonction amine,
- modification de l'élastomère diénique vivant porteur d'un site actif obtenu à l'étape précédente par un agent de fonctionnalisation, susceptible de coupler les chaînes élastomères, porteur d'un bloc polyéther de masse moléculaire moyenne en nombre allant de 150 à 5000 g/mol, avec un rapport molaire de l'agent de fonctionnalisation à l'initiateur de polymérisation d'une valeur allant de 0,40 à 0,60.

7. Procédé de préparation selon la revendication 6, **caractérisé en ce que** l'initiateur de polymérisation à fonction amine est choisi parmi les amidures de lithium obtenus à partir d'une amine secondaire, de préférence cyclique, et d'un composé organolithien.

8. Procédé de préparation selon la revendication 6 ou 7, **caractérisé en ce que** l'agent de fonctionnalisation est représenté par la formule (III)

$$R_1\text{-}(A)_2$$

dans laquelle,

$R_1$ représente un dérivé hydrocarboné alkyle divalent en $C_1$-$C_{15}$, aryle en $C_6$-$C_{15}$ ou aralkyle en $C_7$-$C_{15}$,
chaque A représente, de manière identique ou différente, le groupe de formule générale (IV) :

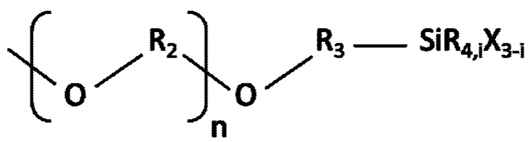

dans laquelle,

$R_2$ représente un radical alkyle divalent en $C_1$-$C_{10}$, particulièrement le radical -CH($R_6$)-CH($R_7$)- dans lequel $R_6$ et $R_7$ sont, indépendamment l'un de l'autre, un atome d'hydrogène ou un radical alkyl en $C_1$-$C_4$,

$R_3$ représente un radical alkyle divalent en $C_1$-$C_{50}$, aryle en $C_6$-$C_{50}$ ou aralkyle en $C_7$-$C_{50}$,
$R_4$ représente un radical alkyle en $C_1$-$C_{50}$, aryle en $C_6$-$C_{50}$ ou aralkyle en $C_7$-$C_{50}$,
chaque X représente, de manière identique ou différente, l'un au moins des groupes choisis parmi un atome d'halogène, et un groupe de formule -$OR_5$ dans laquelle $R_5$ représente un radical alkyle en $C_1$-$C_{18}$, cycloalkyle en $C_5$-$C_{18}$ ou aryle en $C_6$-$C_{18}$,
n est un nombre supérieur à 1,
i est un nombre entier de 0 à 2.

**9.** Procédé selon la revendication 8, **caractérisé en ce que** X représente, de manière identique ou différente, l'un au moins des groupes choisis parmi un atome de chlore et un groupe de formule - $OR_5$ dans laquelle $R_5$ représente un radical alkyle en $C_1$-$C_4$, de préférence un radical méthyle ou éthyle.

**10.** Procédé selon l'une quelconque des revendications 8 à 9, **caractérisé en ce que** n est un nombre inférieur à 120, de préférence un nombre variant de 2 à 60.

**11.** Composition de caoutchouc renforcée à base d'au moins une charge renforçante et une matrice élastomère comprenant au moins un élastomère diénique tribloc tel que défini dans l'une quelconque des revendications 1 à 5.

**12.** Composition de caoutchouc selon la revendication 11, **caractérisée en ce que** la matrice élastomère comprend à titre majoritaire l'élastomère diénique tribloc tel que défini dans l'une quelconque des revendications 1 à 5.

**13.** Composition de caoutchouc selon l'une des revendications 11 à 12, **caractérisée en ce que** ladite charge renforçante comprend une charge inorganique renforçante de type siliceuse selon une fraction massique supérieure à 50 % et allant jusqu'à 100 %.

**14.** Article semi-fini en caoutchouc pour pneumatique, **caractérisé en ce qu'**il comprend une composition de caoutchouc réticulable ou réticulée selon l'une quelconque des revendications 11 à 13.

**15.** Pneumatique, **caractérisé en ce qu'**il comporte un article semi-fini tel que défini dans la revendication 14.

## Patentansprüche

**1.** Triblock-Dienelastomer, dessen zentraler Block ein Polyetherblock mit einem zahlenmittleren Molekulargewicht im Bereich von 150 bis 5000 g/mol ist und über ein Siliciumatom an jeden der seitlichen Blöcke gebunden ist und dessen Kettenenden zu mindestens 70 Mol-%, bezogen auf die Zahl der Mole Kettenende, mit einer Aminfunktion funktionalisiert sind.

**2.** Triblock-Dienelastomer nach Anspruch 1, **dadurch gekennzeichnet, dass** es der folgenden Formel (I) entspricht:

$$R_1\text{-}(A')_2,$$

in der

$R^1$ für ein zweiwertiges $C_1$-$C_{15}$-Alkyl-, $C_6$-$C_{15}$-Aryl-oder $C_7$-$C_{15}$-Aralkylkohlenwasserstoffderivat steht,
A' jeweils gleich oder verschieden ist und für die Gruppe der allgemeinen Formel (II)

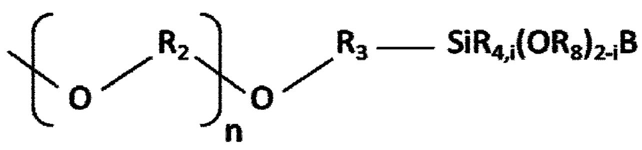

steht, in der

$R^2$ für einen zweiwertigen $C_1$-$C_{10}$-Alkylrest steht, insbesondere für den Rest -$CH(R_6)$-$CH(R_7)$-, in dem $R_6$ und $R_7$ unabhängig voneinander für ein Wasserstoffatom oder einen $C_1$-$C_4$-Alkylrest stehen,
$R^3$ für einen zweiwertigen $C_1$-$C_{50}$-Alkyl-, $C_6$-$C_{50}$-Aryl-oder $C_7$-$C_{50}$-Aralkylrest steht,

$R^4$ für einen $C_1$-$C_{50}$-Alkyl-, $C_6$-$C_{50}$-Aryl- oder $C_7$-$C_{50}$-Aralkylrest steht,
$R_8$ für ein Wasserstoffatom oder einen $C_1$-$C_{18}$-Alkyl-, $C_5$-$C_{18}$-Cycloalkyl- oder $C_6$-$C_{18}$-Arylrest steht, n eine Zahl größer 1 ist,
i eine ganze Zahl mit einem Wert von 0 bis 2 ist,
B für die Gruppe $-[(O-SiR_9R_{10})_q-P]$ steht, in der $R_9$ und $R_{10}$ unabhängig voneinander für einen $C_1$-$C_{50}$-Alkyl-, $C_6$-$C_{50}$-Aryl- oder $C_7$-$C_{50}$-Aralkylrest stehen,
q eine ganze Zahl im Bereich von 0 bis 10 ist und
P ein am Kettenende zu mindestens 70 Mol-% mit einer Aminfunktion funktionalisiertes Dienelastomer ist.

**3.** Triblock-Dienelastomer nach Anspruch 2, **dadurch gekennzeichnet, dass** $R_1$ für einen $C_1$-$C_4$-Alkylrest, vorzugsweise eine Gruppe $-CH_2-CH_2-$ oder $-CH_2-CH(CH_3)-$, steht.

**4.** Triblock-Dienelastomer nach einem der Ansprüche 2 bis 3, **dadurch gekennzeichnet, dass** n eine Zahl kleiner 120, vorzugsweise eine Zahl im Bereich von 2 bis 60, ist.

**5.** Triblock-Dienelastomer nach einem der Ansprüche 2 bis 4, **dadurch gekennzeichnet, dass** q eine ganze Zahl ungleich null, vorzugsweise gleich 1, ist.

**6.** Verfahren zur Herstellung eines Triblock-Dienelastomers gemäß einem der vorhergehenden Ansprüche, **dadurch gekennzeichnet, dass** es Folgendes umfasst:

- anionische Polymerisation mindestens eines konjugierten Dienmonomers in Gegenwart eines Polymerisationsinitiators mit einer Aminfunktion,
- Modifizierung des im vorhergehenden Schritt erhaltenen lebenden Dienelastomers mit einem aktiven Zentrum mit einem zur Kupplung der Elastomerketten befähigten Funktionalisierungsmittel mit einem Polyetherblock mit einem zahlenmittleren Molekulargewicht im Bereich von 150 bis 5000 g/mol bei einem Molverhältnis von Funktionalisierungsmittel zu Polymerisationsinitiator mit einem Wert im Bereich von 0,40 bis 0,60.

**7.** Herstellungsverfahren nach Anspruch 6, **dadurch gekennzeichnet, dass** der Polymerisationsinitiator mit einer Aminfunktion aus Lithiumamiden, die aus einem sekundären, vorzugsweise cyclischen, Amin und einer Organolithiumverbindung erhalten werden, ausgewählt wird.

**8.** Verfahren nach Anspruch 6 oder 7, **dadurch gekennzeichnet, dass** das Funktionalisierungsmittel durch die Formel (III) wiedergegeben wird:

$$R_1\text{-}(A)_2,$$

in der

$R^1$ für ein zweiwertiges $C_1$-$C_{15}$-Alkyl-, $C_6$-$C_{15}$-Aryl-oder $C_7$-$C_{15}$-Aralkylkohlenwasserstoffderivat steht,
A jeweils gleich oder verschieden ist und für die Gruppe der allgemeinen Formel (IV)

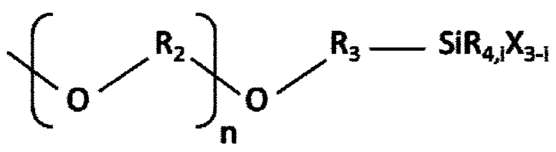

steht, in der

$R^2$ für einen zweiwertigen $C_1$-$C_{10}$-Alkylrest steht, insbesondere für den Rest $-CH(R_6)-CH(R_7)-$, in dem $R_6$ und $R_7$ unabhängig voneinander für ein Wasserstoffatom oder einen $C_1$-$C_4$-Alkylrest stehen,
$R^3$ für einen zweiwertigen $C_1$-$C_{50}$-Alkyl-, $C_6$-$C_{50}$-Aryl-oder $C_7$-$C_{50}$-Aralkylrest steht,
$R^4$ für einen $C_1$-$C_{50}$-Alkyl-, $C_6$-$C_{50}$-Aryl- oder $C_7$-$C_{50}$-Aralkylrest steht,
X jeweils gleich oder verschieden ist und für mindestens eine der Gruppen, die aus einem Halogenatom und einer Gruppe der Formel $-OR^5$ ausgewählt sind, steht, wobei $R^5$ für einen $C_1$-$C_{18}$-Alkyl-, $C_5$-$C_{18}$-Cycloalkyl- oder $C_6$-$C_{18}$-Arylrest steht,
n eine Zahl größer 1 ist,

i eine ganze Zahl von 0 bis 2 ist.

9. Verfahren nach Anspruch 8, **dadurch gekennzeichnet, dass** X gleich oder verschieden ist und für mindestens eine der Gruppen, die aus einem Chloratom und einer Gruppe der Formel $-OR^5$ ausgewählt sind, steht, wobei $R^5$ für einen $C_1$-$C_4$-Alkylrest, vorzugsweise einen Methyl- oder Ethylrest, steht.

10. Verfahren nach einem der Ansprüche 8 bis 9, **dadurch gekennzeichnet, dass** n eine ganze Zahl kleiner 120, vorzugsweise eine Zahl im Bereich von 2 bis 60, ist.

11. Verstärkte Kautschukzusammensetzung auf Basis von mindestens einem verstärkenden Füllstoff und einer Elastomermatrix, die mindestens ein Triblock-Dienelastomer gemäß einem der Ansprüche 1 bis 5 umfasst.

12. Kautschukzusammensetzung nach Anspruch 11, **dadurch gekennzeichnet, dass** die Elastomermatrix hauptsächlich das Triblock-Dienelastomer gemäß einem der Ansprüche 1 bis 5 umfasst.

13. Kautschukzusammensetzung nach einem der Ansprüche 11 bis 12, **dadurch gekennzeichnet, dass** der verstärkende Füllstoff einen verstärkenden anorganischen Füllstoff vom siliciumhaltigen Typ gemäß einem Gewichtsanteil von mehr als 50% und bis zu 100% umfasst.

14. Kautschuk-Halbzeug für Reifen, **dadurch gekennzeichnet, dass** es eine vernetzbare oder vernetzte Kautschukzusammensetzung nach einem der Ansprüche 11 bis 13 umfasst.

15. Reifen, **dadurch gekennzeichnet, dass** er ein Halbzeug gemäß Anspruch 14 umfasst.

## Claims

1. Triblock diene elastomer, the central block of which is a polyether block having a number-average molecular weight ranging from 150 to 5000 g/mol and is connected via a silicon atom to each of the lateral blocks, and the chain ends of which are functionalized to at least 70 mol%, with respect to the number of moles of chain end, by an amine function.

2. Triblock diene elastomer according to Claim 1, **characterized in that** it corresponds to the following formula (I):

$$R_1\text{-}(A')_2$$

in which:

$R_1$ represents a $C_1$-$C_{15}$ divalent alkyl, $C_6$-$C_{15}$ aryl or $C_7$-$C_{15}$ aralkyl hydrocarbon derivative,
each A' represents, identically or differently, the group of general formula (II):

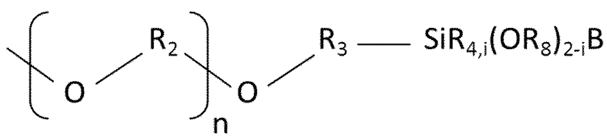

in which:

$R_2$ represents a divalent $C_1$-$C_{10}$ alkyl radical, in particular the $-CH(R_6)-CH(R_7)-$ radical, in which $R_6$ and $R_7$ are, independently of one another, a hydrogen atom or a $C_1$-$C_4$ alkyl radical,
$R_3$ represents a $C_1$-$C_{50}$ divalent alkyl, $C_6$-$C_{50}$ aryl or $C_7$-$C_{50}$ aralkyl radical,
$R_4$ represents a $C_1$-$C_{50}$ alkyl, $C_6$-$C_{50}$ aryl or $C_7$-$C_{50}$ aralkyl radical,
$R_8$ represents a hydrogen atom or a $C_1$-$C_{18}$ alkyl, $C_5$-$C_{18}$ cycloalkyl or $C_6$-$C_{18}$ aryl radical,
n is a number greater than 1,
i is an integer varying from 0 to 2,
B represents the $-[(O-SiR_9R_{10})_q-P]$ group, in which $R_9$ and $R_{10}$ represent, independently of one another, a $C_1$-$C_{50}$ alkyl, $C_6$-$C_{50}$ aryl or $C_7$-$C_{50}$ aralkyl radical, q is an integer ranging from 0 to 10 and P is a diene elastomer functionalized to at least 70 mol% at the chain end by an amine function.

3. Triblock diene elastomer according to Claim 2, **characterized in that** $R_1$ represents a $C_1$-$C_4$ alkyl radical, preferably a $-CH_2-CH_2-$ or $-CH_2-CH(CH_3)-$ group.

4. Triblock diene elastomer according to any one of Claims 2 to 3, **characterized in that** n is a number of less than 120, preferably a number varying from 2 to 60.

5. Triblock diene elastomer according to any one of Claims 2 to 4, **characterized in that** q is a nonzero integer, preferably equal to 1.

6. Process for the preparation of a triblock diene elastomer as defined in any one of the preceding claims, **characterized in that** it comprises:

- anionic polymerization of at least one conjugated diene monomer in the presence of a polymerization initiator having an amine function,
- modification of the living diene elastomer bearing an active site obtained in the preceding stage by a functionalization agent, capable of coupling the elastomer chains, bearing a polyether block having a number-average molecular weight ranging from 150 to 5000 g/mol, with a molar ratio of the functionalization agent to the polymerization initiator with a value ranging from 0.40 to 0.60.

7. Preparation process according to Claim 6, **characterized in that** the polymerization initiator comprising an amine function is chosen from lithium amides obtained from a secondary amine, preferably a cyclic secondary amine, and from an organolithium compound.

8. Preparation process according to Claim 6 or 7, **characterized in that** the functionalization agent is represented by the formula (III):

$$R_1\text{-}(A)_2$$

in which:

$R_1$ represents a $C_1$-$C_{15}$ divalent alkyl, $C_6$-$C_{15}$ aryl or $C_7$-$C_{15}$ aralkyl hydrocarbon derivative,
each A represents, identically or differently, the group of general formula (IV):

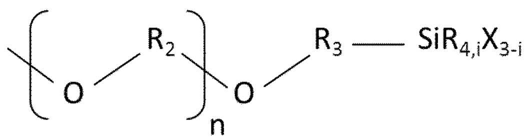

in which:

$R_2$ represents a divalent $C_1$-$C_{10}$ alkyl radical, in particular the $-CH(R_6)-CH(R_7)-$ radical, in which $R_6$ and $R_7$ are, independently of one another, a hydrogen atom or a $C_1$-$C_4$ alkyl radical,
$R_3$ represents a $C_1$-$C_{50}$ divalent alkyl, $C_6$-$C_{50}$ aryl or $C_7$-$C_{50}$ aralkyl radical,
$R_4$ represents a $C_1$-$C_{50}$ alkyl, $C_6$-$C_{50}$ aryl or $C_7$-$C_{50}$ aralkyl radical,
each X represents, identically or differently, one at least of the groups chosen from a halogen atom and a group of formula $-OR_5$ in which $R_5$ represents a $C_1$-$C_{18}$ alkyl, $C_5$-$C_{18}$ cycloalkyl or $C_6$-$C_{18}$ aryl radical,
n is a number greater than 1,
i is an integer from 0 to 2.

9. Process according to Claim 8, **characterized in that** X represents, identically or differently, one at least of the groups chosen from a chlorine atom and a group of formula $-OR_5$ in which $R_5$ represents a $C_1$-$C_4$ alkyl radical, preferably a methyl or ethyl radical.

10. Process according to any one of Claims 8 to 9, **characterized in that** n is a number of less than 120, preferably a number varying from 2 to 60.

11. Reinforced rubber composition based on at least one reinforcing filler and an elastomer matrix comprising at least

one triblock diene elastomer as defined in any one of Claims 1 to 5.

**12.** Rubber composition according to Claim 11, **characterized in that** the elastomer matrix predominantly comprises the triblock diene elastomer as defined in any one of Claims 1 to 5.

**13.** Rubber composition according to either of Claims 11 and 12, **characterized in that** the said reinforcing filler comprises a reinforcing inorganic filler of siliceous type according to a fraction by weight of greater than 50% and ranging up to 100%.

**14.** Semi-finished article made of rubber for a tyre, **characterized in that** it comprises a crosslinkable or crosslinked rubber composition according to any one of Claims 11 to 13.

**15.** Tyre, **characterized in that** it comprises a semi-finished article as defined in Claim 14.

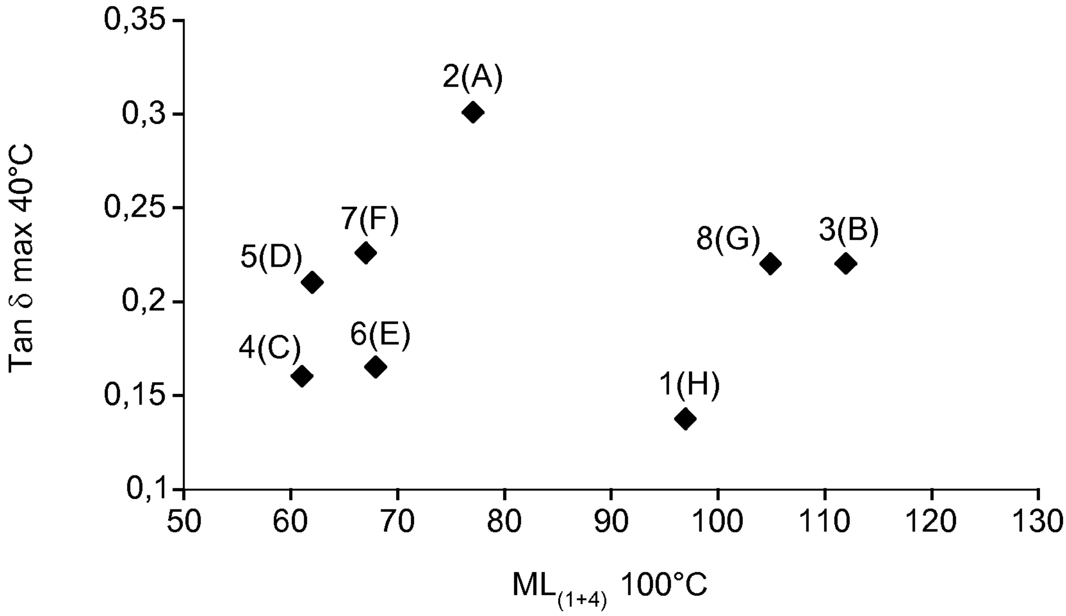
0,35
0,3
0,25
0,2
0,15
0,1
50
60
70
80
90
100
110
120
130
Tan δ max 40°C
ML(1+4) 100°C
2(A)
7(F)
5(D)
8(G)
3(B)
6(E)
4(C)
1(H)

FIG.2

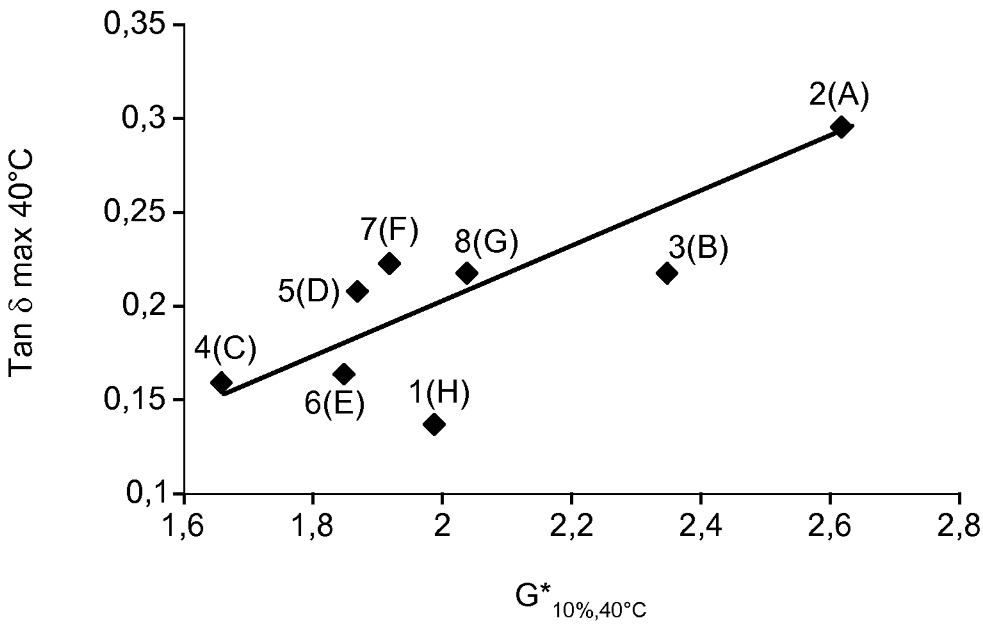
0,35
0,3
0,25
0,2
0,15
0,1
1,6
1,8
2
2,2
2,4
2,6
2,8
Tan δ max 40°C
G*10%,40°C
2(A)
7(F)
8(G)
3(B)
5(D)
4(C)
6(E)
1(H)

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- EP 1127909 B1
- US 6518369 B2
- FR 2918064 B1
- WO 9736724 A
- WO 9916600 A
- US 6610261 B
- US 6747087 B
- WO 9637547 A
- WO 9928380 A
- WO 2006069792 A
- WO 2006069793 A
- WO 2008003434 A
- WO 2008003435 A
- WO 0210269 A


### Littérature non-brevet citée dans la description


- **VILMIN, F. ; DUSSAP, C. ; COSTE, N.** *Applied Spectroscopy,* 2006, vol. 60, 619-29